# EUROPEAN PATENT SPECIFICATION

(11) **EP 4 129 681 B1**
(45) Date of publication and mention of the grant of the patent: **10.06.2026**
(21) Application number: 21774624.7
(22) Date of filing: 09.03.2021
(51) Int. Cl.: B33Y 30/00, B33Y 50/02, B29C 64/153, B29C 64/268, B29C 64/393, G02B 26/10, B22F 10/28, B22F 10/36, B22F 12/44, B22F 12/49, B23K 26/067, B23K 26/082, G02B 19/00, G02B 27/12, B29C 64/286, G02B 26/08, G02B 27/09

(54) **3-DIMENSIONAL SHAPING DEVICE**
DREIDIMENSIONALE FORMGEBUNGSVORRICHTUNG
DISPOSITIF DE MISE EN FORME TRIDIMENSIONNELLE

(30) Priority: 25.03.2020 JP 2020053585
(43) Date of publication of application: 08.02.2023
(73) Proprietor: SCREEN Holdings Co., Ltd., Kyoto-shi, Kyoto 602-8585 (JP)
(72) Inventor: HASHIMOTO, Yoshimi, Kyoto-shi, Kyoto 602-8585 (JP); HISHITANI, Daisuke, Kyoto-shi, Kyoto 602-8585 (JP)
(74) Representative: Goddar, Heinz J.
(86) International application number: PCT/JP2021/009137
(87) International publication number: WO 2021/192988

(56) References cited:
- WO-A1-2019/058883
- JP-A- 2003 001 599
- JP-A- 2003 340 924
- JP-A- 2009 083 240
- US-A1- 2019 061 333

## Description

### Technical Field

The present application relates to a 3-dimensional shaping apparatus.

### Background Art

Conventionally, there has been proposed a 3-dimensional shaping apparatus that irradiates a shaping material such as a metal material (powder) with light from a laser light source and scans the shaping material with the light to melt or sinter the shaping material. Furthermore, in order to increase the speed of shaping, a method of performing 3-dimensional shaping by scanning linear light on a shaping material has also been studied (for example, Patent Document 1).

JP 2003 340924 A discloses an additive manufacturing apparatus. Light is condensed by each micro lens of the micro lens array so as to correspond to each pixel of a DMD50 to form a beam spot on an exposed surface.

### Prior Art Documents

### Patent Documents

Patent Document 1: Japanese Patent Application Laid-Open No. 2003-80604

### Summary

### Problem to be Solved by the Invention

However, when linear light irradiates the shaping material, the temperature of the shaping material varies in the irradiated linear region. When the temperature varies, the melted shaping material flows according to its temperature distribution and surface tension. As a result, the surface of the shaping material partially expands, and the shape of the shaping material integrated by cooling is different from the intended shape. That is, there is a problem that the shape accuracy of the 3-dimensional shaped object decreases.

Therefore, an object of the present application is to provide a technique capable of manufacturing a 3-dimensional shaped object with higher shape accuracy.

### Means to Solve the Problem

A 3-dimensional shaping apparatus according to the first aspect manufactures a 3-dimensional shaped object. According to claim 1, the apparatus includes a beam irradiation unit configured to emit a light beam, a spatial light modulator configured to spatially modulate the light beam emitted by the beam irradiation unit on at least a first axis, a splitting optical system including a plurality of lens arrays having a plurality of lenses arranged along the first axis and configured to split the light beam modulated by the spatial light modulator into a plurality of light beams by the lens array, and a scanning unit configured to scan the shaping material with the plurality of light beams from the splitting optical system.

The second aspect of the 3-dimensional shaping apparatus is the 3-dimensional shaping apparatus according to the first aspect. According to claim 1, the splitting optical system includes an afocal reduction optical system having the plurality of lens arrays.

The third aspect of the 3-dimensional shaping apparatus, not part of the presently claimed invention, is the 3-dimensional shaping apparatus according to the first aspect. The splitting optical system includes the single lens array.

The fourth aspect of the 3-dimensional shaping apparatus is the 3-dimensional shaping apparatus according to any one of the first to second aspects. When the number of the lenses of the lens array is N (N is a natural number of not less than two), the 3-dimensional shaping apparatus further includes a projection optical system configured to enlarge or reduce the light beam modulated by the spatial light modulator on the first axis and cause the light beam after the enlargement or reduction to enter M (M is variable) lenses of the lens array and a controller configured to control a magnification of the projection optical system, and the lens array splits light beam applied on the M lenses into M light beams.

The fifth aspect of the 3-dimensional shaping apparatus is the 3-dimensional shaping apparatus according to the fourth aspect. The controller receives information of the shaping material and sets M to be smaller as a melting point of the shaping material is higher based on the information.

The sixth aspect of the 3-dimensional shaping apparatus is the 3-dimensional shaping apparatus according to the fourth or fifth aspect. N is one of an odd number and an even number, and the controller limits M to the one of the odd number and the even number.

The seventh aspect of the 3-dimensional shaping apparatus is the 3-dimensional shaping apparatus according to the fourth or fifth aspect. The apparatus further includes a moving mechanism configured to move the splitting optical system relative to the projection optical system on the first axis. The controller controls the moving mechanism to adjust a relative positional relationship between the projection optical system and the splitting optical system such that light beams from the projection optical system enter the M lenses of the lens array.

The eighth of the 3-dimensional shaping apparatus is the 3-dimensional shaping apparatus according to any one of the fourth to seventh aspects. The projection optical system enlarges or reduces the light beam modulated by the spatial light modulator at a variable magnification on a second axis intersecting the first axis.

The ninth aspect of the 3-dimensional shaping apparatus is the 3-dimensional shaping apparatus according to any one of the fourth to eighth aspects. The beam irradiation unit includes a light source configured to emit the light beam with variable intensity.

The 10th aspect of the 3-dimensional shaping apparatus is the 3-dimensional shaping apparatus according to any one of fourth to ninth aspects. M includes M1 and M2 smaller than M1, and when at least one of the M1 light beams arranged along the first axis is positioned on an unnecessary line that need not be scanned in a scanning path of the M1 light beams by the scanning unit, the controller changes the magnification of the projection optical system to cause the projection optical system to make the light beams enter the M2 lenses and cause the lens array to emit the M2 light beams, and omits scanning of the unnecessary line by scanning with the M2 light beams by the scanning unit.

The 11th aspect of the 3-dimensional shaping apparatus is the 3-dimensional shaping apparatus according to the 10th aspect. The scanning unit performs scanning using the M2 light beams at a scanning speed higher than a scanning speed of the M1 light beams.

The 12th aspect of the 3-dimensional shaping apparatus is the 3-dimensional shaping apparatus according to the 10th or 11th aspect. The controller changes the magnification of the projection optical system in a state in which irradiation with the light beam by the beam irradiation unit and scanning by the scanning unit are interrupted.

The 13th aspect of the 3-dimensional shaping apparatus is the 3-dimensional shaping apparatus according to any one of the first to 12th aspects. The lens array of the splitting optical system is provided at a focal point of an immediately preceding optical system.

The 14th aspect of the 3-dimensional shaping apparatus is the 3-dimensional shaping apparatus according to any one of the first to 13th aspects, excluding the third aspect, not part of the presently claimed invention. The apparatus further includes an aperture portion having a plurality of openings through which the plurality of light beams split by the lens array pass.

The 15th aspect of the 3-dimensional shaping apparatus is the 3-dimensional shaping apparatus according to any one of the first to the 14th aspects, excluding the third aspect, not part of the presently claimed invention. The spatial light modulator includes a plurality of groups arranged along at least the first axis, each of the plurality of groups includes a plurality of spatial modulation elements, and intensity distributions of the plurality of light beams are respectively controlled by the plurality of groups.

The 16th aspect of the 3-dimensional shaping apparatus is the 3-dimensional shaping apparatus according to any one of the first to the 14th aspects, excluding the third aspect, not part of the presently claimed invention. The spatial light modulator includes a plurality of spatial modulation elements arrayed two-dimensionally.

The 17th aspect of the 3-dimensional shaping apparatus is the 3-dimensional shaping apparatus according to the 15th aspect. The spatial light modulator modulates the light beam from the beam irradiation unit such that intensity of the light beam incident on a boundary of the plurality of lenses of the lens array of the splitting optical system is smaller than intensity of the light beam incident on a center of each of the plurality of lenses.

The 18th aspect of the 3-dimensional shaping apparatus is the 3-dimensional shaping apparatus according to any one of the first to the 17th aspects, excluding the third aspect, not part of the presently claimed invention. The apparatus further includes an image rotator configured to integrally rotate the plurality of light beams from the splitting optical system about a rotation axis parallel to an optical axis at a variable rotation angle. The scanning unit includes a galvanometer mirror, and the image rotator is provided at a stage subsequent to the galvanometer mirror.

The 19th aspect of the 3-dimensional shaping apparatus is the 3-dimensional shaping apparatus according to any one of the first to the 17th aspects, excluding the third aspect, not part of the presently claimed invention. The apparatus further includes an image rotator configured to integrally rotate the plurality of light beams from the splitting optical system about a rotation axis parallel to an optical axis at a variable rotation angle. The scanning unit includes a galvanometer mirror, and the image rotator is provided at a stage subsequent to the galvanometer mirror.

The 20th aspect of the 3-dimensional shaping apparatus is the 3-dimensional shaping apparatus according to any one of the first to the 19th aspects, excluding the third aspect, not part of the presently claimed invention. An array direction of the plurality of light beams on the shaping material obliquely intersects a scanning direction of the plurality of light beams by the scanning unit, and the plurality of light beams are respectively positioned in a plurality of consecutive scanning lines.

### Effects of the Invention

According to the first aspect of the 3-dimensional shaping apparatus, spots of a plurality of light beams are formed on the shaping material. Since the plurality of spots are separated from each other, the flowable range of the melted shaping material is narrow. Accordingly, the partial expansion of the melted shaping material can be reduced. In other words, a 3-dimensional shaped object can be manufactured with high shape accuracy.

According to the second aspect of the 3-dimensional shaping apparatus, it is possible to increase the strength of the peripheral edge region of each spot on the shaping material which is closer to the peripheral edge side than the central region. When the intensity of only the central region of the spot is high, spatter or fume of the shaping material may be caused. However, since the intensity of the peripheral edge region of the spot can be increased, the intensity distribution of the spot can be made uniform, and the possibility that spatter or fume occurs in the shaping material can be reduced.

According to the third aspect of the 3-dimensional shaping apparatus, not part of the presently claimed invention, the splitting optical system can be configured with a simple configuration.

According to the fourth aspect of the 3-dimensional shaping apparatus, M corresponds to the beam count. According to the fourth aspect, the beam count M obtained by splitting by the array lens can be adjusted.

According to the fifth aspect of the 3-dimensional shaping apparatus, the power of each spot can be increased by reducing the beam count M. This makes it possible to cope with a shaping material having a high melting point. On the other hand, when the melting point is low, it is possible to widen the meltable region by one scan by increasing the beam count M. This can improve the throughput.

According to the sixth aspect of the 3-dimensional shaping apparatus, the projection optical system can be configured with a simple configuration. More specifically, the moving mechanism according to the seventh aspect is not required.

According to the seventh aspect of the 3-dimensional shaping apparatus, the beam count M may be an even number or an odd number.

According to the eighth aspect of the 3-dimensional shaping apparatus, it is possible to adjust the width of the spot on the second axis and finely adjust the power (area integral value of intensity) of the spot.

According to the ninth aspect of the 3-dimensional shaping apparatus, the power of each spot can be finely adjusted.

According to the 10th aspect of the 3-dimensional shaping apparatus, the scanning of an unnecessary line is omitted by changing the beam count M. This makes it possible to reduce the amount of light not used for three-dimensional shaping and improve the efficiency.

According to the 11th aspect of the 3-dimensional shaping apparatus, the area integral value of the intensity of each light beam (each spot) increases in the scanning of M2 light beams as compared with the scanning of M1 light beams. When the scanning speed is constant, the time integration of the amount of heat applied from each spot to each position of the shaping material increases, but in the 10th aspect, the scanning speed is high in M2 scans. Therefore, it is possible to reduce variations in the amount of heat between rows due to the decrease in the beam count M. Moreover, since the scanning speed is high, the throughput can also be improved.

According to the 12th aspect of the 3-dimensional shaping apparatus, when the magnification is changed while the light beam is applied, the shaping material is irradiated with unexpected light. However, since the magnification is changed while the irradiation with a light beam is stopped, such unexpected light can be avoided from being applied to the shaping material.

According to the 13th aspect of the 3-dimensional shaping apparatus, the crosstalk of the light beam can be reduced.

According to the 14th aspect of the 3-dimensional shaping apparatus, the light passing through the boundary of the lens in the lens array may travel in an unintended direction, but such unnecessary light can be blocked by the aperture portion.

According to the 15th aspect of the 3-dimensional shaping apparatus, the spatial intensity distribution of the light beam can be more finely adjusted.

According to the 16th aspect of the 3-dimensional shaping apparatus, the power density of the light beam can be improved.

According to the 17th aspect of the 3-dimensional shaping apparatus, the intensity of the light beam passing through the boundary of the lenses in the lens array can be reduced. Therefore, it is possible to reduce a light beam that passes through the boundary of the lenses and travels in an unintended direction.

According to the 18th aspect of the 3-dimensional shaping apparatus, the array direction and the scanning direction of the plurality of spots on the shaping material can be changed.

According to the 19th aspect of the 3-dimensional shaping apparatus, the array direction of the plurality of spots on the shaping material can be changed. On the other hand, the scanning direction does not rotate depending on the rotation of the image rotator. Therefore, the interval between the plurality of scanning lines corresponding to the plurality of spots can be adjusted.

According to the 20th aspect of the 3-dimensional shaping apparatus, scanning of the scanning lines of the plurality of consecutive rows can be performed by one movement of the plurality of spots along the scanning direction while the plurality of spots are separated from each other. Accordingly, scanning can be performed in units of a plurality of consecutive rows.

Objects, features, aspects, and advantages associated with the technology disclosed in the present specification will be more obvious from the following detailed description and the accompanying drawings.

### Brief Description of Drawings

Fig. 1 is a view schematically showing an example of the configuration of a 3-dimensional shaping apparatus.
Fig. 2 is a perspective view schematically showing an example of the configuration of a spatial light modulator.
Fig. 3 is a plan view schematically showing an example of the state of a surface of a shaping material layer.
Fig. 4 is a view schematically showing an example of an optical path in the 3-dimensional shaping apparatus.
Fig. 5 is a flowchart showing an example of processing by a controller.
Fig. 6 is a view schematically showing an example of the intensity distribution of a modulated beam.
Fig. 7 is a view schematically showing another example of the configuration of a splitting optical system, not part of the presently claimed invention.
Fig. 8 is a view schematically showing an example of the configuration of a beam irradiation device.
Fig. 9 is a view schematically showing an example of the configuration of the beam irradiation device.
Fig. 10 is a view schematically showing an example of the configuration of the beam irradiation device.
Fig. 11 is a view schematically showing an example of the configuration of a projection optical system.
Fig. 12 is a functional block diagram showing another example of the internal configuration of a controller.
Fig. 13 is a flowchart showing another example of processing by the controller.
Fig. 14 is a graph showing an example of the intensity distribution of a modulated beam.
Fig. 15 is a perspective view schematically showing another example of the configuration of the projection optical system.
Fig. 16 is a perspective view schematically showing an example of the configuration of a c-axis zoom optical system of the projection optical system.
Fig. 17 is a graph schematically showing an example of the intensity distribution of a modulated beam.
Fig. 18 is a view schematically showing an example of the optical path when 2 is adopted as a beam count.
Fig. 19 is a view schematically showing another example of the configuration of the beam irradiation device.
Fig. 20 is a functional block diagram showing another example of the internal configuration of a controller.
Fig. 21 is a flowchart showing another example of processing by the controller.
Fig. 22 is a view schematically showing an example of a spot scanning mode.
Fig. 23 is a flowchart showing an example of processing by a controller.
Fig. 24 is a view schematically showing an example of the configuration of the beam irradiation device.
Fig. 25 is a functional block diagram showing another example of the internal configuration of a controller.
Fig. 26 is a view schematically showing an example of a spot when the rotation angle of an image rotator is 0°.
Fig. 27 is a view schematically showing an example of a spot when the rotation angle of the image rotator is 45°.
Fig. 28 is a view schematically showing an example of a spot when the rotation angle of the image rotator is 90°.
Fig. 29 is a view schematically showing another example of the configuration of the beam irradiation device.
Fig. 30 is a view schematically showing an example of a spot when the rotation angle of the image rotator is 45°.
Fig. 31 is a view schematically showing another example of the configuration of a spatial light modulator.

### Description of Embodiments

Embodiments will be described below with reference to the accompanying drawings. Note that the constituent elements described in the present embodiment are merely examples, and the scope of the present disclosure is not intended to be limited thereto. In the drawings, for easy understanding, the dimensions and the number of portions may be exaggerated or simplified as necessary.

In addition, in the following description, even if ordinal numbers such as "first" and "second" are used, these terms are used for convenience to facilitate understanding of the contents of the embodiments, and the contents of the embodiments are not limited to the order or the like that can be caused by these ordinal numbers.

Expressions indicating a relative or absolute positional relationship (for example, "in one direction", "along one direction", "parallel", "orthogonal", "center", "concentric", and "coaxial") not only strictly represent the positional relationship, but also represent a state of being relatively displaced in terms of angle or distance within the range in which a tolerance or a similar function is obtained, unless otherwise specified. Expressions indicating equal states (for example, "same", "equal", and "homogeneous") not only represent states that are quantitatively and strictly equal, but also represent states in which there are differences that allow tolerances or similar functions to be obtained, unless otherwise specified. Unless otherwise specified, an expression indicating a shape (for example, "quadrangular" or "cylindrical") not only represents the shape geometrically and strictly, but also represents a shape having, for example, unevenness or a chamfered portion within a range in which the same level of effect can be obtained. The expression "comprising", "provided with", "equipped with", "including," or "having" one constituent element is not an exclusive expression of excluding the presence of other constituent elements. The expression "at least any one of A, B, and C" includes only A, only B, only C, any two of A, B and C, and all of A, B and C.

### < First Embodiment >

In the following description, "heating and melting the shaping material" includes not only a case in which the temperatures of all the heated shaping materials are equal to or higher than the melting point, but also a case in which a part of the heated shaping material is sintered at a temperature lower than the melting point.

Furthermore, the term "layer" in the following description refers to a portion formed in one process when a 3-dimensional shaped object is formed by stacking solidified objects in the thickness direction by repeating a process of irradiating the deposited shaping material with a light beam to melt the material a plurality of times. The boundary between the layers may be able to be checked by cross-section observation of a 3-dimensional shaped object, but the boundary between the layers may not be clearly detected when the uniformity of melting is high.

### <Configuration of 3-Dimensional Shaping Apparatus>

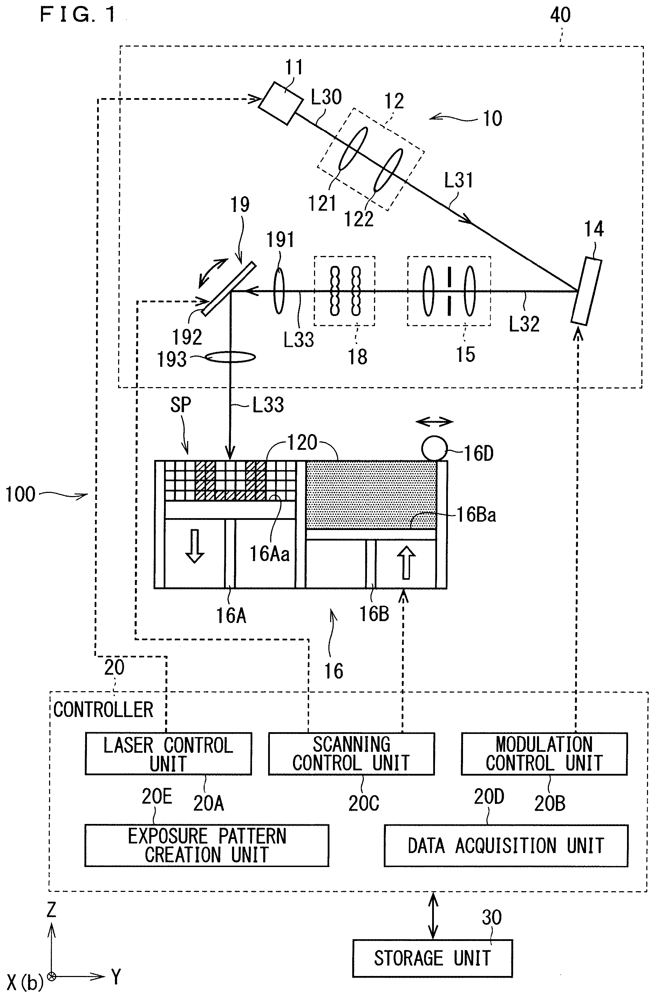

An example of a 3-dimensional shaping apparatus 100 will be described with reference to Fig. 1. Fig. 1 is a view schematically showing an example of the configuration of the 3-dimensional shaping apparatus 100. In the present embodiment, an X-axis, a Y-axis, and a Z-axis orthogonal to each other may be described for convenience. In this case, the X-axis and the Y-axis are parallel to the horizontal direction, and the Z-axis is parallel to the vertical direction. In the present embodiment, an a-axis, a b-axis, and a c-axis orthogonal to each other may be described as axes of the optical system. The a-axis is an optical axis.

The 3-dimensional shaping apparatus 100 repeats a process of irradiating a shaping material with a light beam (a modulated beam L33) to melt the shaping material a plurality of times, thereby manufacturing a 3-dimensional shaped object by stacking solidified objects in the thickness direction. The 3-dimensional shaping apparatus 100 is also referred to as a 3-dimensional additive manufacturing apparatus.

Referring to Fig. 1, the 3-dimensional shaping apparatus 100 includes a beam irradiation device 40 and a controller 20. The beam irradiation device 40 irradiates a shaping material with the modulated beam L33. The controller 20 controls the beam irradiation device 40.

The controller 20, for example, controls a control target by executing a program stored in an internal or external storage medium (including a storage unit 30 described later) and includes a processing device such as a central processing unit (CPU), a microprocessor, or a microcomputer. Part or all of the functions of the controller 20 may be implemented by a hardware circuit such as a logic circuit that does not require software. The controller 20 is also called a control circuit.

The 3-dimensional shaping apparatus 100 further includes a supply mechanism 16 and the storage unit 30. The storage unit 30 includes a volatile or nonvolatile memory such as a random access memory (RAM), a read only memory (ROM), or a flash memory, and a storage unit such as a hard disk drive (HDD).

The 3-dimensional shaping apparatus 100 manufactures a 3-dimensional shaped object in a shaping space SP. In this case, the shaping space SP is a 3-dimensional space.

The 3-dimensional shaped object is manufactured into a desired shape using a predetermined shaping material. The shaping material is a powder or paste, and is, for example, a metal powder, engineering plastic, ceramic, or synthetic resin. As a metal powder, for example, titanium, aluminum, or stainless steel can be adopted. The shaping material used for 3-dimensional shaping may include a plurality of types of shaping materials.

The shaping material is supplied to a predetermined unit space by, for example, the supply mechanism 16. Then, the shaping material is irradiated with the modulated beam L33. The temperature of the portion of the shaping material which is irradiated with the modulated beam L33 increases. The surface of this portion or the entire portion of the shaping material melts. By scanning the modulated beam L33 on the shaping material, the shaping material is integrated in a desired shape.

The shape of the 3-dimensional shaped object is not particularly limited. In addition, 3-dimensional shaping data indicating the desired shape of a 3-dimensional shaped object is stored in the storage unit 30 by, for example, the manufacturer. The 3-dimensional shaping data is, for example, computer aided design (CAD) data or stereolithography (STL) data.

A specific example of the beam irradiation device 40 that irradiates a shaping material with the modulated beam L33 will be outlined next. In the example of Fig. 1, the beam irradiation device 40 includes a beam irradiation unit 10, a spatial light modulator 14, a projection optical system 15, a splitting optical system 18, and a scanning unit 19.

The beam irradiation unit 10 includes a laser light source 11 and an illumination optical system 12. The laser light source 11 emits a laser beam L30 to the illumination optical system 12. The laser light source 11 is, for example, a fiber laser light source. The wavelength of the laser beam L30 is, for example, 1064 nm. The cross-sectional shape of the laser beam L30 in a plane perpendicular to the traveling direction of the laser beam L30 is, for example, substantially circular. The cross-sectional dimension of the laser beam L30 in a plane perpendicular to the traveling direction of the laser beam L30 increases as the laser beam L30 travels in the traveling direction.

The illumination optical system 12 shapes the laser beam L30 into a parallel light beam (hereinafter, also referred to as a parallel beam L31) and guides the parallel beam L31 to the spatial light modulator 14. The cross-sectional dimension of the parallel beam L31 in a plane perpendicular to the traveling direction of the parallel beam L31 is ideally constant even when the beam L31 travels in the traveling direction. The parallel beam L31 has substantially uniform intensity in the vertical plane. The parallel beam L31 has, for example, a rectangular shape elongated in one direction (the direction perpendicular to the drawing surface) on the perpendicular plane. The parallel beam L31 like that described above may also be referred to as a line beam.

The spatial light modulator 14 modulates the parallel beam L31 and guides a modulated beam L32 after modulation to the projection optical system 15. The spatial light modulator 14 is, for example, a Linear-PLV (Planar Light Valve), a GLV (registered trademark: Grating Light Valve), or a DMD (Digital Micromirror Device).

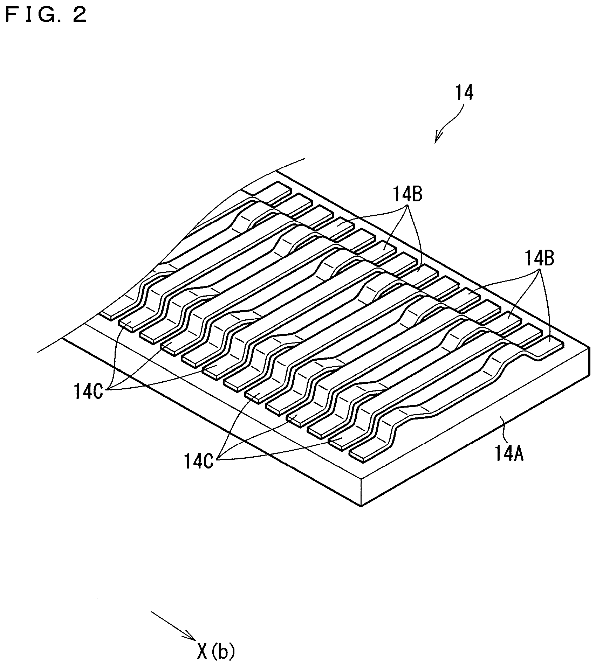

Fig. 2 is a view schematically showing an example of the configuration of the spatial light modulator 14. In the example of Fig. 2, the spatial light modulator 14 is a GLV and includes a substrate 14A and a set or a plurality sets of ribbon-shaped microbridges 14B and ribbon-shaped microbridges 14C that are arranged in parallel on the substrate 14A and alternately arranged. These microbridges function as one pixel of a diffraction grating type spatial modulator. The microbridge 14B is also referred to as a movable ribbon, and the microbridge 14C is also referred to as a fixed ribbon. The direction in which the microbridges 14B and 14C are arranged is the same as the longitudinal direction of the parallel beam L31.

The microbridge 14B has a portion other than an end portion thereof which is located away from the substrate 14A. The lower surface of the microbridge 14B which faces the substrate 14A is formed of a flexible member made of silicon nitride (SiNx) or the like. The upper surface of the microbridge 14B which is opposite to the lower surface is formed of a reflective electrode film made of a single-layer metal film such as aluminum.

The driving of the spatial light modulator 14 is controlled by turning on/off a voltage applied between the microbridge 14B and the substrate 14A. When the voltage applied between the microbridge 14B and the substrate 14A is turned on, an electrostatic attraction force is generated between the microbridge 14B and the substrate 14A by the electrostatically induced charges, and the microbridge 14B bends toward the substrate 14A. Since no charge is applied to the microbridges 14C and the microbridges 14C each maintain a state (shape) as it is, a diffraction grating is formed by the microbridges 14B and the microbridges 14C. The light applied to one pixel of the spatial light modulator 14 is reflected or diffracted, and the propagation direction of the light changes. When the deflection amount of the microbridge 14B becomes 1/4 of the wavelength of light, the intensity of the specularly reflected light or the Oth-order diffracted light becomes 0, while the intensity of the first-order diffracted light becomes maximum. On the other hand, when the voltage applied between the microbridge 14B and the substrate 14A is turned off, the deflection is eliminated, the microbridge 14B moves away from the substrate 14A to the same height as the microbridge 14C, and the spatial light modulator 14 behaves as a specularly reflecting mirror. Accordingly, the intensity of specularly reflected light or Oth-order diffracted light is maximized. By switching on and off the voltage of the microbridge 14B in this manner, the microbridge functions as an optical modulator that turns on and off the intensity of specularly reflected light or first-order diffracted light.

Ordinarily, each pixel of the GLV element is composed of, for example, three sets of microbridges 14B and 14C, and the spatial light modulator 14 includes, for example, 1000 pixels. The 1000 pixels are arranged side by side along the longitudinal direction of the parallel beam L31. That is, 1000 sets each constituted by three sets of microbridges 14B and 14C are arranged along the longitudinal direction of the parallel beam L31. Furthermore, the spatial light modulator 14 is configured such that 1000 pixels are divided into, for example, 5 groups each including 200 pixels. The spatial light modulator 14 modulates the parallel beam L31 as 5 groups and emits the modulated beam L32. As described above, since each group has 200 pixels, the shape of the light intensity distribution can be freely deformed.

The projection optical system 15 blocks unnecessary light of the modulated beam L32 from the spatial light modulator 14. For example, the projection optical system 15 blocks the high-order diffracted light included in the modulated beam L32 and passes the Oth-order diffracted light.

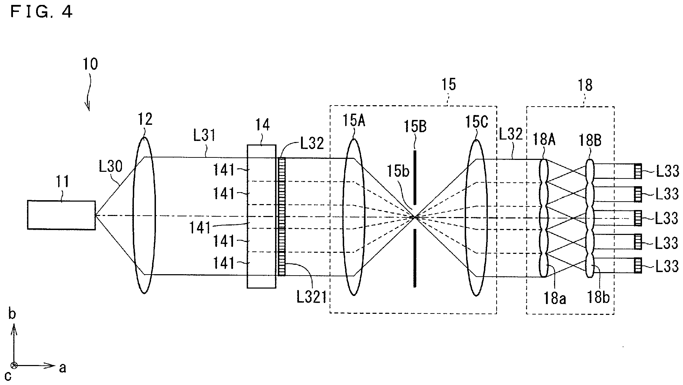

The splitting optical system 18 splits the modulated beam L32 that has passed through the projection optical system 15 into a plurality of modulated beams L33 (see also Fig. 4). For example, the splitting optical system 18 splits the modulated beam L32 for each group of pixels of the spatial light modulator 14. In this case, since the spatial light modulator 14 includes five groups each constituted by 200 pixels, the splitting optical system 18 splits the modulated beam L32 into the five modulated beams L33. The five modulated beams L33 are arranged at intervals in a plane perpendicular to the traveling direction. Each modulated beam L33 has, for example, a rectangular shape in the plane.

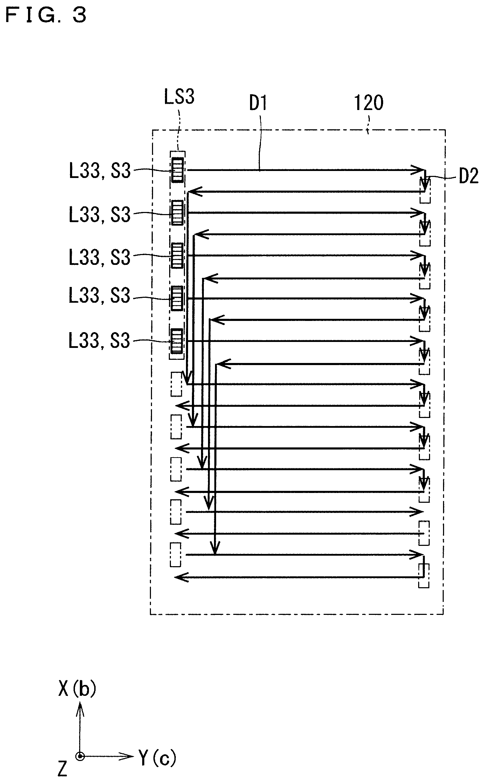

The scanning unit 19 spot-irradiates a shaping material layer 120 with the plurality of modulated beams L33. Fig. 3 is a plan view schematically showing an example of a state of a surface of the shaping material layer 120. In the example of Fig. 3, the surface of the shaping material layer 120 is irradiated with the plurality of modulated beams L33. As a result, a plurality of spots S3 are formed on the surface of the shaping material layer 120. The spot S3 indicates a region irradiated with the modulated beam L33 on the surface of the shaping material layer 120. The plurality of spots S3 are arranged at intervals on the surface of the shaping material layer 120. In this case, the direction in which the spots S3 are arranged on the shaping material layer 120 is also referred to as an array direction D2. In the example of Fig. 3, the array direction D2 is parallel to the X-axis.

The scanning unit 19 scans (moves) the plurality of spots S3 along a scanning direction D1 (the Y axis in this case) intersecting the array direction D2. In the example of Fig. 1, the scanning unit 19 includes a galvanometer mirror 192. The scanning unit 19 integrally moves the plurality of spots S3 on the shaping material layer 120 by the rotation of the galvanometer mirror 192. Although the scanning mode of the spots S3 is arbitrary, for example, raster scan may be adopted. By this scanning, the shaping material layer 120 is melted and sintered according to the intensity distribution in each spot S3 and integrated into a desired shape.

The supply mechanism 16 that supplies a shaping material will be described next. As exemplarily shown in Fig. 1, the supply mechanism 16 includes a part cylinder 16A, a feed cylinder 16B, and a squeegee 16D. The supply mechanism 16 sequentially stacks the shaping material layers 120 in a predetermined unit space. The shaping material layer 120 is made of a shaping material.

The feed cylinder 16B has a lower surface 16Ba inside the feed cylinder 16B. The lower surface 16Ba is movable in the Z-axis direction inside the feed cylinder 16B. A shaping material is accommodated in an upper portion of the lower surface 16Ba inside the feed cylinder 16B.

On the other hand, the part cylinder 16A has a lower surface 16Aa inside the part cylinder 16A. The lower surface 16Aa is movable in the Z-axis direction inside the part cylinder 16A. The shaping space SP is set in an upper portion of the lower surface 16Aa inside the part cylinder 16A.

The shaping material is supplied from the feed cylinder 16B to the inside of the part cylinder 16A. More specifically, the lower surface 16Aa of the part cylinder 16A is lowered by a predetermined distance. On the other hand, the lower surface 16Ba of the feed cylinder 16B is raised by a predetermined distance. Then, the squeegee 16D is moved from the feed cylinder 16B toward the part cylinder 16A. As a result, a predetermined amount of shaping material moves from the inside of the feed cylinder 16B to the inside of the part cylinder 16A.

An example of the controller 20 will be described next. The controller 20 controls the beam irradiation device 40 and the supply mechanism 16. As a specific example, the controller 20 includes a laser control unit 20A, a modulation control unit 20B, a scanning control unit 20C, a data acquisition unit 20D, and an exposure data creation unit 20E.

The data acquisition unit 20D receives 3-dimensional shaping data from, for example, an external apparatus or a storage medium. The data acquisition unit 20D stores the 3-dimensional shaping data in the storage unit 30.

The exposure data creation unit 20E creates exposure data based on the 3-dimensional shaping data acquired by the data acquisition unit 20D and stores the exposure data in the storage unit 30. The exposure data is data indicating the state of each spatial modulation element (microbridge 14B) of the spatial light modulator 14 and is, for example, data indicating each voltage applied between each microbridge 14B and the substrate 14A. It can also be said that the exposure data is data indicating the modulation pattern of the spatial light modulator 14. The exposure data creation unit 20E decides the intensity of the modulated beam L33 at each position on each shaping material layer 120 so that a 3-dimensional shaped object indicated by the 3-dimensional shaping data can be manufactured, decides the modulation pattern of the spatial light modulator 14 for applying the modulated beam L33 with the intensity, and creates exposure data indicating the modulation pattern.

The laser control unit 20A controls the laser light source 11 to cause the laser light source 11 to emit the laser beam L30.

The modulation control unit 20B controls the spatial light modulator 14 on the basis of the exposure data created by the exposure data creation unit 20E. As a result, the intensity distribution of the light of the modulated beam L32 becomes an intensity distribution reflecting the shape indicated by the 3-dimensional shaping data.

The scanning control unit 20C controls the scanning unit 19 and the supply mechanism 16. The scanning control unit 20C controls the scanning unit 19 and the supply mechanism 16 so as to sequentially guide the modulated beams L33 to a predetermined unit space. More specifically, the scanning control unit 20C rotates the galvanometer mirror 192 to scan the shaping material layer 120 with the modulated beam L33.

Furthermore, the scanning control unit 20C sequentially forms the shaping material layer 120 in a predetermined unit space by moving the part cylinder 16A, the feed cylinder 16B, and the squeegee 16D.

### <Optical Path>

An example of an optical path in the 3-dimensional shaping apparatus 100 will be described next with reference to Fig. 4. Fig. 4 is a view schematically showing an example of an optical path in the 3-dimensional shaping apparatus 100. Hereinafter, the orthogonal coordinate system of the optical system will be introduced and described. The orthogonal coordinate system includes an a-axis, a b-axis, and a c-axis orthogonal to each other, and the a-axis corresponds to an optical axis. The b-axis is an axis extending in the longitudinal direction of the parallel beam L31, and the c-axis is an axis extending in the lateral direction of the parallel beam L31.

As shown in Fig. 4, the illumination optical system 12 converts the laser light L30 emitted from the laser light source 11 into the parallel beam L31 and guides the parallel beam L31 to the spatial light modulator 14. Referring to Fig. 1, the illumination optical system 12 may include collimator lenses 121 and 122. The collimator lenses 121 and 122 are, for example, cylindrical lenses or Powell lenses. The collimator lens 121 converts the laser beam L30 into parallel light as viewed along the c-axis, and the collimator lens 122 converts the laser beam L30 into parallel light as viewed along the b-axis. Note that the illumination optical system 12 may include a single collimator lens, and another optical element may be added to the illumination optical system 12.

The spatial light modulator 14 modulates the parallel beam L31 from the illumination optical system 12 to adjust the intensity distribution of the light in the b-axis. The spatial light modulator 14 includes a plurality of (here, five) modulation element groups 141. Each modulation element group 141 corresponds to one group. The spatial light modulator 14 modulates the parallel beam L31 in units of groups. Accordingly, the modulated beam L32 is configured such that a partially modulated beam L321 modulated by each group (modulation element group 141) is continuous along the b-axis.

In the example of Fig. 4, a projection image of the modulated beam L32 from the spatial light modulator 14 is schematically shown. Furthermore, referring to Fig. 4, for convenience, the optical path is straight before and after the spatial light modulator 14, but in a case in which the spatial light modulator 14 is a reflection type modulator, the optical path before and after the spatial light modulator 14 is in opposite directions (see also Fig. 1).

The projection optical system 15 blocks unnecessary light of the modulated beam L32 from the spatial light modulator 14. For example, the projection optical system 15 includes a lens 15A, an aperture portion 15B, and a lens 15C. The lens 15A is, for example, a Fourier transform lens and focuses Oth-order diffracted light of the modulated beam L32 from the spatial light modulator 14 on the opening 15b of the aperture portion 15B. The aperture portion 15B is provided at the focal position of the lens 15A and allows only the Oth-order diffracted light included in the modulated beam L32 to pass therethrough. In other words, the high-order diffracted light (for example, the first-order diffracted light) included in the modulated beam L32 is condensed on a portion other than the opening 15b of the aperture portion 15B and blocked. The lens 15C is, for example, an inverse Fourier transform lens and converts the modulated beam L32 (0th-order diffracted light) having passed through the aperture portion 15B into parallel light. Note that another optical element may be added to the projection optical system 15.

The splitting optical system 18 splits the modulated beam L32 from the projection optical system 15 into the plurality of modulated beams L33. In the example of Fig. 4, the splitting optical system 18 is an afocal reduction optical system including lens arrays 18A and 18B. The lens array 18A includes a plurality of (five in Fig. 1) lenses 18a arranged along the b-axis. The number of lenses 18a arrayed along the b-axis is the same as the number of groups (modulation element groups 141) of the spatial light modulator 14. The plurality of lenses 18a can be arrayed continuously. In other words, the plurality of lenses 18a may be arrayed along the b-axis and integrated without being spaced apart.

The lens array 18B includes a plurality of (here, five) lenses 18b arrayed along the b-axis. The number of lenses 18b arrayed along the b-axis is the same as the number of groups (modulation element groups 141) of the spatial light modulator 14. The plurality of lenses 18b can also be arrayed continuously. The lens array 18B is provided at a position where the plurality of lenses 18b respectively face the plurality of lenses 18a of the lens array 18A in the optical axis (a-axis) direction. Note that another optical element may be added to the splitting optical system 18.

The modulated beam L32 from the projection optical system 15 enters the five lenses 18a of the lens array 18A. More specifically, the modulated beam L32 enters the entirety of the five lenses 18a. That is, ideally, the width of the modulated beam L32 incident on the lens array 18A is equal to the entire width of the five lenses 18a. When the width of the modulated beam L32 from the spatial light modulator 14 does not coincide with the entire width of the lens 18a, the projection optical system 15 may increase or reduce the width of the modulated beam L32 so that the width of the modulated beam L32 coincides with the entire width of the five lenses 18a. Such increase and reduction can be implemented by appropriately selecting the lenses 15A and 15C.

The modulated beam L32 includes five partially modulated beams L321 arranged continuously along the b-axis. When the modulated beam L32 enters the lens array 18A, the five partially modulated beams L321 respectively enter the five lenses 18a. Each lens 18a focuses the corresponding partially modulated beam L321 at each focal position. As a result, the modulated beam L32 is split into a plurality of (here, five) modulated beams L33. That is, each modulated beam L33 corresponds to a beam obtained by reducing each partially modulated beam L321.

Each of the plurality of split modulated beams L33 enters the lens 18b of the lens array 18B. Each lens 18b converts the incident modulated beam L33 into parallel light. Since the focal length on the light source side of the lens array 18B is shorter than the focal length on the image side of the lens array 18A, the width (width along the b-axis) of each modulated beam L33 emitted from the splitting optical system 18 is narrower than the width of the partially modulated beam L321. In the example of Fig. 4, a projection image of the plurality of modulated beams L33 having passed through the lens array 18B is schematically shown.

The lens array 18A is preferably provided at a focal position (synthetic focal position) on the image side of the immediately preceding optical system (projection optical system 15). That is, the lens array 18A is preferably provided at a position where a projection image of the projection optical system 15 is formed. As a result, in the intensity distribution of the modulated beam L32 at the arrangement position of the lens array 18A, the crosstalk of the light of the partially modulated beams L321 adjacent to each other can be reduced.

Referring to Fig. 1, the plurality of modulated beams L33 from the splitting optical system 18 enter the galvanometer mirror 192 via the lens 191 and are reflected by the reflecting surface of the galvanometer mirror 192. The lens 191 may include a plurality of lenses. The plurality of modulated beams L33 reflected by the galvanometer mirror 192 irradiate the surface of the shaping material layer 120 via the lens 193. The lens 193 includes, for example, an fθ lens. The lens 193 may include a plurality of lenses. By irradiating the shaping material layer 120 with the plurality of modulated beams L33, a plurality of spots S3 are formed on the surface of the shaping material layer 120 (see also Fig. 3). The lens 191, the galvanometer mirror 192, and the lens 193 belong to the scanning unit 19.

As the galvanometer mirror 192 rotates about a predetermined rotation axis, the plurality of spots S3 integrally move along the scanning direction D1. Although only one galvanometer mirror 192 is schematically shown in the example of Fig. 1, two galvanometer mirrors are actually provided. The rotation axes of the galvanometer mirrors 192 cross each other and, more specifically, are orthogonal to each other. Each galvanometer mirror 192 is independently controlled, so that the plurality of spots S3 can be moved along an arbitrary scanning direction. In this case, as an example, by rotating only one of the galvanometer mirrors, the plurality of spots S3 can be moved along the scanning direction D1, whereas by rotating only the other of the galvanometer mirrors, the plurality of spots S3 can be moved along the orthogonal direction (for example, the array direction D2) orthogonal to the scanning direction D1.

### <Processing by Controller>

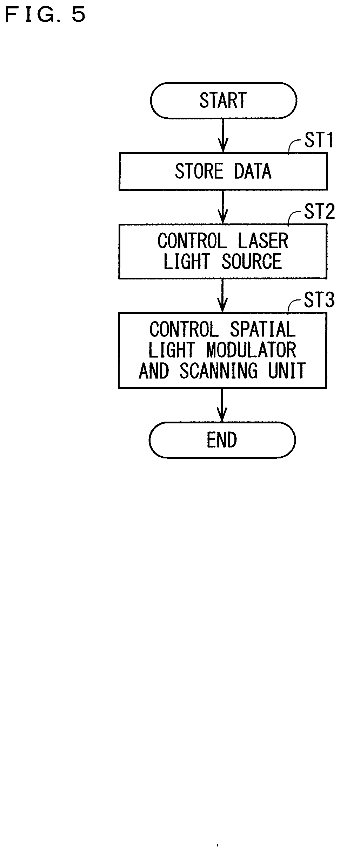

An example of processing by the controller 20 will be described next with reference to Fig. 5. Fig. 5 is a flowchart showing an example of processing by the controller 20.

First, the data acquisition unit 20D receives 3-dimensional shaping data from, for example, an external apparatus or a storage medium to store the 3-dimensional shaping data in the storage unit 30 (step ST1). The exposure data creation unit 20E creates exposure data based on the 3-dimensional shaping data.

Next, the laser control unit 20A controls the laser light source 11 (step ST2). More specifically, the laser control unit 20A causes the laser light source 11 to emit the laser beam L30. The laser beam L30 is converted into the parallel beam L31 in the illumination optical system 12 and enters the spatial light modulator 14.

The modulation control unit 20B controls the spatial light modulator 14, and the scanning control unit 20C controls the scanning unit 19 (step ST3). More specifically, the modulation control unit 20B controls the spatial light modulator 14 on the basis of the exposure data. With this control, the spatial light modulator 14 modulates the parallel beam L31 and emits the modulated beam L32 after the modulation. The modulated beam L32 has an intensity distribution reflecting the shape indicated by the 3-dimensional shaping data. The modulated beam L32 enters the splitting optical system 18 via the projection optical system 15. The splitting optical system 18 splits the modulated beam L32 into the plurality of modulated beams L33. The scanning unit 19 guides the plurality of modulated beams L33 from the splitting optical system 18 to the shaping material layer 120. In parallel with the modulation control by the modulation control unit 20B, the scanning control unit 20C controls the scanning unit 19 to move the spot S3 on the shaping material layer 120.

An example of the scanning path will be described below. In the example of Fig. 3, the interval between the spots S3 is about the same as the width of the spot S3. That is, the five spots S3 are initially positioned at the heads of the scanning lines of the first row, the third row, the fifth row, the seventh row, and the ninth row, respectively. Moving the five spots S3 in the scanning direction D1 will finish scanning of the scanning lines of the first row, the third row, the fifth row, the seventh row, and the ninth row.

Subsequently, the scanning unit 19 moves the five spots S3 along the array direction D2 by the same extent as the width of the spot S3. As a result, the five spots S3 are positioned on the scanning lines of the second row, the fourth row, the sixth row, the eighth row, and the 10th row, respectively. Next, the scanning unit 19 scans the five spots S3 along scanning direction D1. This finishes the scanning of the scanning lines of the second, fourth, sixth, eighth, and 10th rows. Through the above operation, scanning of the scanning lines from the first row to the 10th row is completed.

Next, the scanning unit 19 moves the five spots S3 along array direction D2 such that the head spot S3 is positioned in the scanning line of the 11th row. As a result, the five spots S3 are positioned on the scanning lines of the 11th row, the 13th row, the 15th row, the 17th row, and the 19th row. Thereafter, similarly, moving the five spots S3 makes it possible to scan the entire region on the shaping material layer 120 with the spots S3. As a result, the shaping material layer 120 is melted and sintered at a position corresponding to the 3-dimensional shaping data and is shaped into the shape indicated by the 3-dimensional shaping data.

When the scanning of the shaping material layer 120 is completed, the 3-dimensional shaping apparatus 100 stacks the next shaping material layer 120 and performs scanning again. The 3-dimensional shaping apparatus 100 carries out this process a plurality of times to manufacture a 3-dimensional shaped object.

As described above, the 3-dimensional shaping apparatus 100 can manufacture a 3-dimensional shaped object. Furthermore, according to the 3-dimensional shaping apparatus 100, the plurality of spots S3 are separated from each other on the shaping material layer 120 (see Fig. 3).

For comparison, consider a case in which the five spots S3 are continuous with each other. That is, consider a case in which the shaping material layer 120 is irradiated with the modulated beam in a line shape. In the example of Fig. 3, a linear modulated beam on the shaping material layer 120 is indicated by a line LS3. In this case, the shaping material may be melted over the entire line LS3. Accordingly, for example, the shaping material melted at one end portion in the line LS3 can flow to a position closer to the other end portion. That is, the melted shaping material flows in a wider range. As the temperature distribution of the shaping material in the line LS3 varies, the shaping material locally flows into a part from a wider range. This increases the expansion of the part of the shaping material.

On the other hand, according to the 3-dimensional shaping apparatus 100, the plurality of spots S3 are separated from each other. Since the shaping material melts at each spot S3, the flowable range of the shaping material can be narrowed. Therefore, the expansion of the shaping material can be reduced. Therefore, the 3-dimensional shaped object can be manufactured in a state closer to a desired shape. In other words, a 3-dimensional shaped object can be manufactured with high shape accuracy.

For further comparison, consider also a case of manufacturing a 3-dimensional shaped object with the single spot S3. In this case, in order to improve the throughput, it is conceivable to increase the moving speed (also referred to as the scanning speed) of the spot S3 while increasing the light intensity of the spot S3. However, changing the intensity and moving speed of the spot S3 changes the phenomenon process (for example, the degree of melting and evaporation) of the shaping material. Since the intensity range and the moving speed range suitable for manufacturing the 3-dimensional shaped object are determined in advance, there is a limit to improving the throughput in the 3-dimensional shaping with the single spot S3.

On the other hand, in the present embodiment, the plurality of spots S3 can be formed on the shaping material layer 120. According to this, scanning can be performed on a region for a plurality of rows by one movement, so that the throughput can be improved. That is, the throughput can be improved by increasing the number of spots S3 while adopting the strength and the scanning speed suitable for the shaping material.

In the present embodiment, the splitting optical system 18 splits the modulated beam L32 into the plurality of modulated beams L33 using single laser light source 11. Therefore, the device size and manufacturing cost of the beam irradiation device 40 can be reduced as compared with a case in which a plurality of modulated beams is formed from a plurality of laser light sources 11.

### <Splitting Optical System>

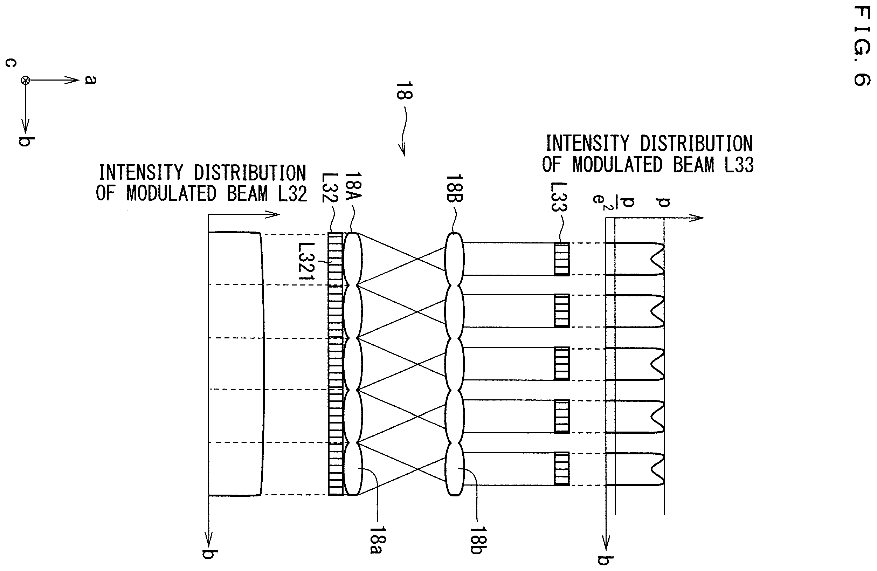

In the example of Fig. 4, the splitting optical system 18 includes lens arrays 18A and 18B. Fig. 6 is a view schematically showing an example of the intensity distributions of the modulated beam L32 incident on the splitting optical system 18 and the plurality of modulated beams L33 output from the splitting optical system 18. In the example of Fig. 6, the splitting optical system 18 is also shown. In the example of Fig. 6, the intensity distribution of the modulated beam L32 incident on the splitting optical system 18 has a rectangular shape. That is, the intensity of the modulated beam L32 is substantially constant regardless of the position on the b-axis.

On the other hand, the intensity distribution of each modulated beam L33 output from the splitting optical system 18 has a concave shape in which the intensity at the center is smaller than the intensities on both sides. That is, the intensity of each modulated beam L33 is higher in both side regions than in the central region. This is due to a diffraction phenomenon that occurs near the boundary between the lenses 18a of the lens array 18A and near the boundary between the lenses 18b of the lens array 18B.

As described above, the splitting optical system 18 including the lens arrays 18A and 18B can output the modulated beam L32 having high intensity on both sides even if the intensity of the modulated beam L33 is constant. Therefore, even in the spot S3 on the shaping material layer 120, the intensity in both side regions is higher than that in the central region.

For comparison, consider a case in which the intensity distribution of each modulated beam L33 has a convex shape having a peak value at the central position thereof. As a beam having such a convex intensity distribution, a Gaussian beam can be exemplified. The intensity of each modulated beam L33 takes a peak value at the center position and decreases as it goes away from the center position. The intensity distribution of the spot S3 on the shaping material layer 120 is similar to the above.

In order to apply a sufficient amount of heat to the entire region in the spot S3, it is necessary to increase the area integral value of the intensity in the spot S3. For example, when the scanning speed of the spot S3 is to be improved, it is necessary to increase the area integral value of the intensity of the spot S3 in order to apply a sufficient amount of heat at each position on the shaping material layer 120. In a Gaussian beam, since the intensity has a peak value in the central region, when the area integral value is increased, the spot S3 exhibits an extreme intensity distribution in which the intensity at the center is extremely higher than the intensity at the periphery. In the spot S3 described above, since the amount of heat is intensively applied to a minute region at the center thereof, the minute region instantaneously has a higher temperature than the peripheral region. This causes spatter, i.e., the spatter of the melted material at the center to the periphery or fume, i.e., the coagulation of the evaporated shaping material.

On the other hand, in the above-described example, since the lens arrays 18A and 18B are provided in the splitting optical system 18, the intensity of both side regions is higher than the intensity of the central region in the intensity distribution of each modulated beam L33. According to this, since there are two peak values, it is not necessary to increase the peak value as much as the Gaussian beam in order to increase the area integral value of the intensity in the modulated beam L33 (spot S3). Therefore, the possibility of the occurrence of spatter and fume can be reduced.

Furthermore, since the heat generated near both peak values in the spot S3 also moves to the center side of the spot S3, the temperature distribution of the shaping material in the spot S3 can be made more uniform, and the heat can be effectively used.

### <Separation of Spots>

The positions of both ends of the spot S3 will be described next with reference to Fig. 6. Both ends of the spot S3 are defined at positions where the intensity of the light in the spot S3 is a predetermined ratio of the intensity of a peak value p. More specifically, both ends of the spot S3 are defined by positions whose intensities take p/e2. In this case, e is a Napier's constant. That is, as exemplarily shown in Fig. 6, the positions where the intensity is p/e2 are both ends of the spot S3 on the b-axis. Separation of the spots S3 means that the ends of the adjacent spots S3 are separated from each other.

### <Modulation Element Group>

In the above-described example, each group (modulation element group 141) of the spatial light modulator 14 includes a plurality of spatial modulation elements (microbridge 14B and microbridge 14C). Therefore, each group (modulation element group 141) can finely adjust the intensity distribution of the partially modulated beam L321. For example, the spatial light modulator 14 may control each partially modulated beam L32 such that the intensity distribution of each modulated beam L321 has a plurality of (for example, three or more) peak values. This also eliminates the need to increase the peak value as much as the Gaussian beam in order to increase the area integral value of the intensity in the spot S3, and the temperature distribution of the shaping material in the spot S3 can be made more uniform.

As described above, in the example of Fig. 6, the modulated beam L32 (the plurality of partially modulated beams L321) having uniform intensity on the b-axis passes through the lens arrays 18A and 18B, so that the intensity of each of the plurality of modulated beams L33 is smaller in the central region than in the both side regions. Accordingly, each modulation element group 141 of the spatial light modulator 14 may adjust the intensity distribution of the partially modulated beam L321 such that the intensity of both side regions of each partially modulated beam L321 is lower than that of the central region. According to this, the modulated beam L32 passes through the lens arrays 18A and 18B so that the intensity distribution of each modulated beam L33 can be brought close to the top hat shape (that is, a substantially rectangular shape). In other words, the spatial light modulator 14 may control each partially modulated beam L32 such that the intensity distribution of each modulated beam L321 has a substantially rectangular shape. This makes it possible to further uniformize the temperature distribution of the shaping material in the spot S3.

When GLV or PLV is adopted as the spatial light modulator 14, the intensity of each spatial modulation element can be adjusted in multiple gradations, so that the intensity distribution of the light of the modulated beam L33 can be more finely adjusted. In addition, even when the spatial modulation element adjusts the intensity by binary (ON/OFF), it is possible to finely adjust the intensity distribution of light by increasing the number of spatial modulation elements constituting the modulation element group 141. Furthermore, by temporally modulating ON/OFF of the spatial modulation element, the time average value of the intensity can be adjusted in multiple gradations. Such modulation is similar to pulse width modulation. Thus, the intensity can be adjusted in multiple gradations in a pseudo manner.

For example, when the temperature distribution of the shaping material in the spot S3 does not cause much problem, each group (modulation element group 141) of the spatial light modulator 14 may be configured by a single pixel.

### <Another Example of Splitting Optical System>

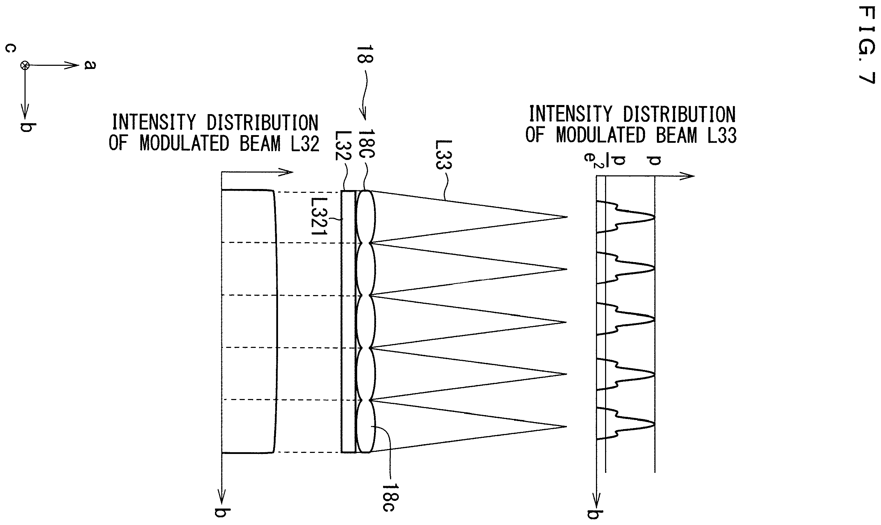

Fig. 7 is a view schematically showing another example of the configuration of the splitting optical system 18, not part of the presently claimed invention. In the example of Fig. 7, the splitting optical system 18 includes a single lens array 18C. The lens array 18C includes a plurality of (here, five) lenses 18c arrayed along the b-axis. The number of lenses 18c arrayed along the b-axis is the same as the number of groups (modulation element groups 141) of the spatial light modulator 14. The plurality of lenses 18c can be arrayed continuously. In other words, the plurality of lenses 18c may be arrayed along the b-axis and integrated without being spaced apart. The focal length of the lens array 18C on the image side is, for example, longer than that of the lens array 18A.

Each partially modulated beam L321 of the modulated beams L32 enters the corresponding lens 18c. As a result, the modulated beam L32 is split into a plurality of modulated beams L33. The modulated beam L33 has, for example, a rectangular shape in a cross-section perpendicular to its traveling direction.

According to this configuration, the intensity distribution (far field image) of the modulated beam L33 takes a first peak value at the center thereof and takes a second peak value smaller than the first peak value on both sides separated from the center thereof as in a Sinc function. Therefore, as compared with the Gaussian beam having no second peak value, the temperature distribution of the shaping material in the spot S3 can be made more uniform, and heat can be effectively used. In addition, the area integral value of the intensity in the spot S3 is higher than that of the Gaussian beam having no second peak value. Therefore, it is not necessary to increase the peak value as much as the Gaussian beam in order to increase the area integral value. Therefore, the possibility of the occurrence of spatter or fume can be reduced.

Since the splitting optical system 18 in Fig. 7 is configured by the single lens array 18C, the splitting optical system 18 can be configured more easily. Accordingly, the device size and manufacturing cost of the beam irradiation device 40 can be reduced. On the other hand, the splitting optical system 18 of Fig. 6 can further increase the intensity of both side regions of the modulated beam L33 and further uniformize the intensity distribution. Therefore, the temperature distribution of the shaping material in the spot S3 can be made more uniform.

### <Spatial Light Modulator>

As the spatial light modulator 14, a phase type spatial light modulator may be used. For example, a phase type PLV and a phase type GLV can be adopted. The spatial light modulator 14 can modulate the parallel beam L31 by interference of light due to the phase difference. According to this, since it is not necessary to shield unnecessary light by the aperture portion 15B, a loss of light can be reduced.

In the above example, the spatial light modulator 14 is a one-dimensional spatial light modulator but may be a two-dimensional spatial light modulator. That is, the spatial modulation elements may be arrayed two-dimensionally in a bc plane. According to this, the intensity distribution of the modulated beam L33 can be adjusted two-dimensionally (bc plane).

### <Scanning Mode>

In the example of Fig. 3, the interval between the spots S3 is about the same as the width of the spot S3 but may be changed as appropriate. The interval between the spots S3 can be adjusted, for example, by adjusting a reduction magnification in the splitting optical system 18. For example, the interval between the spots S3 may be set to be about the same as an integral multiple of the width of the spot S3.

Furthermore, since the heat generated at the spot S3 also moves to the periphery thereof, the shaping material may be melted or sintered also at the periphery. Therefore, by setting the interval of the spots S3 to be very narrow, the shaping material layer 120 may be melted or sintered even between the spots S3. In this case, the five spots S3 correspond to the scanning lines of the first to fifth rows, respectively. By moving these five spots S3 along the scanning direction D1, scanning can be performed on the scanning lines from the first to fifth rows. Subsequently, after the five spots S3 are moved by five rows along the array direction D2, the five spots S3 are moved again along the scanning direction D1, so that scanning can be performed on the scanning lines from the sixth to 10 rows. Thereafter, similarly, moving the five spots S3 makes it possible to scan the entire region on the shaping material layer 120 with the spots S3. As a result, the shaping material layer 120 is melted and sintered to be integrated in a desired shape.

More generally, the scanning unit 19 may repeat the process of scanning the scanning lines for N consecutive rows by moving N (N is a natural number of 2 or more) spots S3 along scanning direction D1 and the process of moving the N spots S3 for N rows in the direction intersecting scanning direction D1.

Even in this case, since the spots S3 are separated from each other, the temperature of the shaping material between the spots S3 is lower than the temperature of the shaping material in the spot S3. Therefore, the fluidity of the shaping material between the spots S3 can be lowered. This makes it possible to suppress mixing of the shaping material between the scanning lines. This can reduce the partial expansion of the shaping material layer 120 and shape the shaping material layer 120 into a desired shape with high shape accuracy.

### <Second Embodiment>

A 3-dimensional shaping apparatus 100 according to the second embodiment has the same configuration as the 3-dimensional shaping apparatus 100 according to the first embodiment except for the internal configuration of a beam irradiation device 40. Hereinafter, the beam irradiation device 40 according to the second embodiment is referred to as a beam irradiation device 40A.

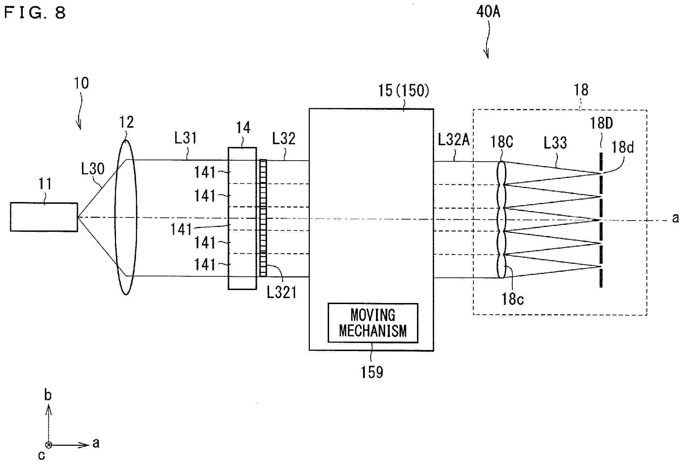

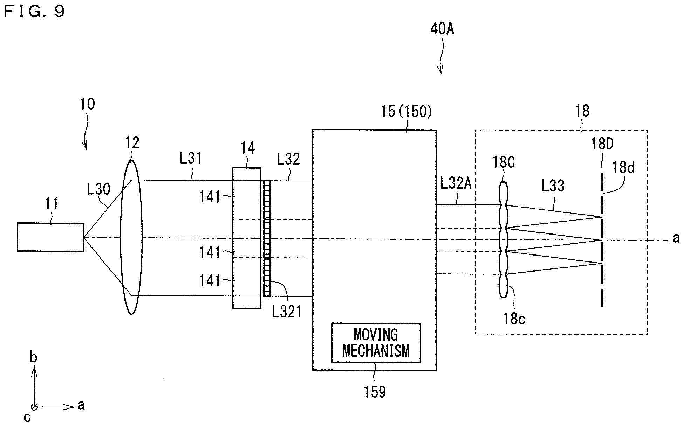

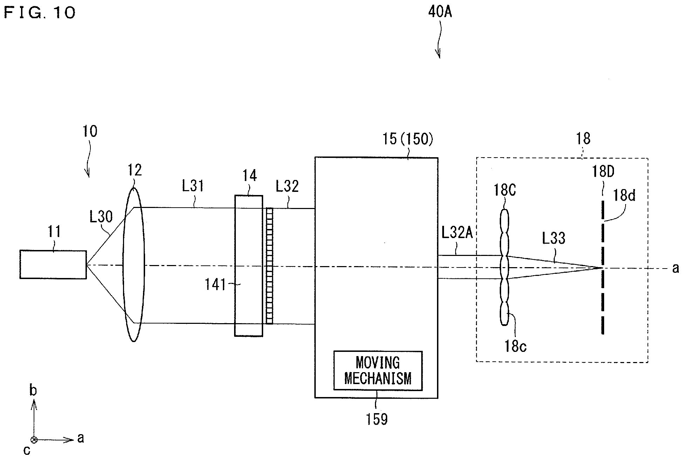

Figs. 8 to 10 are views schematically showing an example of the configuration of the beam irradiation device 40A. The beam irradiation device 40A can change a beam count M of a modulated beam L33. **In** other words, the beam irradiation device 40A can irradiate a shaping material layer 120 with the modulated beam L33 with the variable beam count M. In the example of Fig. 8, the beam irradiation device 40A emits the five modulated beams L33. In the example of Fig. 9, the beam irradiation device 40A emits the three modulated beams L33. In the example of Fig. 10, the beam irradiation device 40A emits the one modulated beam L33.

Hereinafter, the maximum value of the beam count M of the modulated beam L33 that can be emitted by the beam irradiation device 40A is represented by N. In this case, for example, N is 5. The beam count M is N or less and variable.

The beam irradiation device 40 A has the same configuration as the beam irradiation device 40 except for the internal configuration of a projection optical system 15. Hereinafter, the projection optical system 15 according to the second embodiment is referred to as a projection optical system 150.

The projection optical system 150 is an enlarging or reducing optical system (which may also be referred to as a zoom optical system) that adjusts the width (width on the b-axis) of the modulated beam L32. The projection optical system 150 increases or reduces the width of the modulated beam L32 and causes the enlarged or reduced modulated beam L32 (hereinafter, referred to as a modulated beam L32A) to enter an entire M lenses 18c. In other words, the projection optical system 150 adjusts the width of the modulated beam L32 such that the modulated beam L32A enters the entire M lenses 18c. A lens array 18C splits the modulated beam L32 A into M modulated beams L33. That is, the beam count M can be made variable by adjusting the magnification of the projection optical system 150 to adjust the number of modulated beams L32A incident on the lens 18c.

Hereinafter, the magnification of the projection optical system 150 on the b-axis is represented by Db0 when the modulated beam L32A is made incident on the entire N lenses 18c of the lens array 18C.

The projection optical system 150 multiplies the width of the modulated beam L32 from the spatial light modulator 14 by (M·Db0/N) and guides the modulated beam L32A to a splitting optical system 18. The projection optical system 150 is an afocal optical system. The magnification (M·Db0/N) of the projection optical system 150 is controlled by a controller 20.

Referring to Fig. 8, when the beam count M of is 5, the projection optical system 150 multiplies the modulated beam L32 by Db0 on the b-axis and guides the modulated beam L32A to the splitting optical system 18. The modulated beam L32A from the projection optical system 150 enters the five lenses 18c of the lens array 18C. Accordingly, the lens array 18C splits the modulated beam L32 A into the five modulated beams L33. Therefore, five spots S3 are formed on the shaping material layer 120.

When the beam count M of is 3, the projection optical system 150 multiplies the modulated beam L32 by (3·Db0/5) on the b-axis and guides the modulated beam L32A to the splitting optical system 18 (see Fig. 9). Since the projection optical system 150 adjusts the width of the modulated beam L32 around the optical axis (a-axis), the modulated beam L32A enters the entire three lenses 18c arranged on the center side of the lens array 18C. Accordingly, the lens array 18C splits the modulated beam L32 A into the three modulated beams L33. Therefore, the three spots S3 are formed on the shaping material layer 120.

When the beam count M is 3 as described above, the modulated beam L32 A is split into the three modulated beams L33. Since each modulated beam L33 corresponds to one group, the intensity distribution of the modulated beam L32A on the b axis needs to have intensity distributions corresponding to three groups. Therefore, it is necessary to change the configuration (assignment) of one group in the spatial light modulator 14.

For example, when the beam count M is 5, the spatial light modulator 14 modulates a parallel beam L31 in five groups and emits the modulated beam L32. Hereinafter, the number of spatial modulation elements (for example, a microbridge 14B and a microbridge 14C) of the spatial light modulator 14 is 30. In this case, the spatial light modulator 14 modulates the parallel beam L31 using six spatial modulation elements as one group (modulation element group 141).

On the other hand, when the beam count M is 3, the spatial light modulator 14 modulates the parallel beam L31 with three groups. That is, when the beam count M is 3, the spatial light modulator 14 modulates the parallel beam L31 with 10 spatial modulation elements as one group. In short, when the beam count M is 5, six spatial modulation elements are assigned to one group, whereas when the beam count M is 3, 10 spatial modulation elements are assigned to one group.

Such group assignment is implemented by an exposure data creation unit 20E. More specifically, the exposure data creation unit 20E generates exposure data such that six spatial modulation elements form one group when the beam count M is 5 and generates exposure data such that 10 spatial modulation elements form one group when the beam count M is 3. A modulation control unit 20B controls the spatial light modulator 14 on the basis of the exposure data.

As a result, the spatial light modulator 14 can modulate the parallel beam L31 with the number of groups corresponding to the beam count M as described above. More specifically, when the beam count M is 5, the spatial light modulator 14 modulates the parallel beam L31 with five groups. At this time, the modulated beam L32 is configured by causing five partially modulated beams L321 corresponding to the five groups to be continuous on the b-axis (see Fig. 8). The five partially modulated beams L321 respectively enter the five lenses 18c of the lens array 18C via the projection optical system 15. Each lens 18c reduces the incident partially modulated beam L321 and guides it to a scanning unit 19 as a modulated beam L33. This makes it possible to irradiate the shaping material layer 120 with the five modulated beams L33 corresponding to the five groups of the spatial light modulator 14.

On the other hand, when the beam count M is 3, the spatial light modulator 14 modulates the parallel beam L31 with three groups. At this time, the modulated beam L32 is configured by causing the three partially modulated beams L321 corresponding to the three groups to be continuous on the b-axis (see Fig. 9). The three partially modulated beams L321 respectively enter the three lenses 18c of the lens array 18C on the center side via the projection optical system 15. Each lens 18c reduces the incident partially modulated beam L321 and guides it to a scanning unit 19 as a modulated beam L33. This makes it possible to irradiate the shaping material layer 120 with the three modulated beams L33 corresponding to the three groups of the spatial light modulator 14.

When the beam count M of is 1, the projection optical system 150 multiplies the modulated beam L32 by (Db0/5) on the b-axis and guides the modulated beam L32A to the splitting optical system 18 (see Fig. 10). Since the projection optical system 150 adjusts the width of the modulated beam L32 around the optical axis (a-axis), the modulated beam L32A enters the entire one lenses 18c arranged on the center side of the lens array 18C. The lens array 18C reduces the one modulated beam L32A and outputs the reduced modulated beam L32A as one modulated beam L33. Therefore, one spot S3 is formed on the shaping material layer 120.

When the beam count M is 1, the spatial light modulator 14 modulates the parallel beam L31 with one group. In the above example, since the spatial light modulator 14 includes 30 spatial modulation elements, the 30 spatial modulation elements are grouped to modulate the parallel beam L31. In other words, the 30 spatial modulation elements are assigned to one group.

Such group assignment is implemented by an exposure data creation unit 20E, as described above. More specifically, the exposure data creation unit 20E creates exposure data such that one group is constituted by 30 spatial modulation elements. A modulation control unit 20B controls the spatial light modulator 14 on the basis of the exposure data. The spatial light modulator 14 modulates the parallel beam L31 with one group. The modulated beam L32 is composed of one partially modulated beam L321.

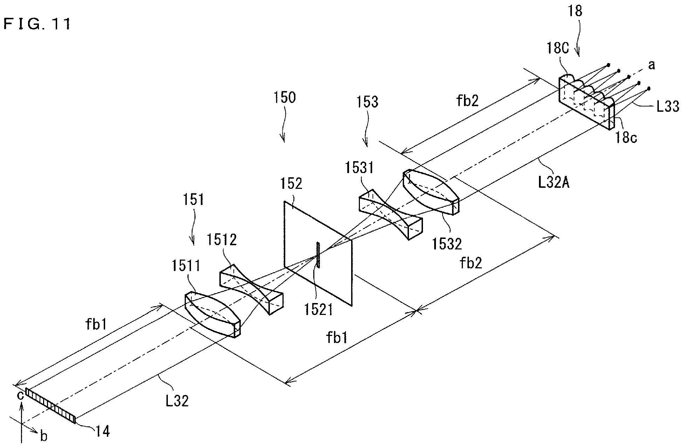

Fig. 11 is a perspective view schematically showing an example of the configuration of only the b-axis zoom optical system in the projection optical system 150. The projection optical system 150 includes a first lens group 151, an aperture portion 152, and a second lens group 153. The modulated beam L32 from the spatial light modulator 14 enters the first lens group 151. The first lens group 151 condenses the modulated beam L32 on the b-axis and condenses the beam on a slit-shaped opening 1521 of the aperture portion 152.

The first lens group 151 includes, for example, lenses 1511 and 1512. The lens 1511 is a convex lens, and the lens 1512 is a concave lens. In the example of Fig. 11, the lenses 1511 and 1512 are cylindrical lenses. In the example of Fig. 11, the lens 1511 is located closer to the spatial light modulator 14 than the lens 1512.

The opening 1521 has an elongated shape with the b-axis as a minor axis and the c-axis as a major axis, and the modulated beam L32 from the first lens group 151 passes through the opening 1521. The aperture portion 152 blocks unnecessary light (for example, high-order diffracted light of the spatial light modulator 14) included in the modulated beam L32. The aperture portion 152 can also function as a diaphragm.

The second lens group 153 converts the modulated beam L32 having passed through the opening 1521 into a modulated beam L32A parallel to the b-axis. The second lens group 153 includes, for example, lenses 1531 and 1532. The lens 1531 is a concave lens, and the lens 1532 is a convex lens. In the example of Fig. 11, the lenses 1531 and 1532 are cylindrical lenses. In the example of Fig. 11, the lens 1531 is located closer to the spatial light modulator 14 than the lens 1532.

The lenses 1511 and 1512 of the first lens group 151, the aperture portion 152, and the lenses 1531 and 1532 of the second lens group 153 are configured to be movable in the optical axis (a-axis) direction independently of each other. In other words, a moving mechanism 159 (see also Figs. 8 to 10) that independently moves these optical elements is provided. The moving mechanism 159 includes, for example, a ball screw mechanism or the like and is controlled by the controller 20.

The b-axis side of the projection optical system 150 constitutes a so-called double telecentric optical system, and this magnification is represented by fb2/fb1 using a composite focal length fb1 of the first lens group 151 and a composite focal length fb2 of the second lens group 153. The moving mechanism 159 appropriately moves the optical element in the projection optical system 150 such that the magnification (fb2/fb1) of the b-axis of the projection optical system 150 coincides with M/N. This allows the projection optical system 150 to multiply the modulated beam L32 by (M/N) on the b-axis and guide the modulated beam L32A to the splitting optical system 18. Note that the positions of the optical elements of the projection optical system 150 are adjusted such that the spatial light modulator 14 and the aperture portion 152 coincide with the front focal position and the rear focal position of the first lens group 151, respectively, and the aperture portion 152 and the lens array 18C coincide with the front focal position and the rear focal position of the second lens group 153, respectively.

As described above, in the second embodiment, the beam count M of the modulated beam L33 can be changed. Since the number of spots S3 on the shaping material layer 120 increases as the beam count M of the modulated beams L33 increases, scanning can be performed on a larger region by integrally moving the plurality of spots S3 along the scanning direction D1. Therefore, the throughput can be improved as the beam count M is larger.

If the loss of light in the projection optical system 150 is ignored, the power (the unit is watt) of the modulated beam L32A is equal to the power of the modulated beam L32. The power of the light beam corresponds to the area integral value of the intensity of the light beam. In addition, if the loss of light in the splitting optical system 18 is ignored, the power of each modulated beam L33 is equal to the value obtained by dividing the power of the modulated beam L32A by the beam count M. That is, the power of the modulated beam L33 increases as the beam count M decreases. Therefore, as the beam count M decreases, the amount of heat per unit area applied to the shaping material layer 120 in the spot S3 can be increased. Therefore, even with a shaping material having a high melting point, the shaping material can be melted and sintered by reducing the beam count M.

As described above, according to the 3-dimensional shaping apparatus 100, the power of each modulated beam L33 can be changed by changing the beam count M of the modulated beam L33 (spot S3) with which the shaping material layer 120 is irradiated. For example, the controller 20 sets the beam count M of the modulated beam L33 to be small for a shaping material having a high melting point. This makes it possible to appropriately melt and sinter the shaping material having a high melting point. On the other hand, the beam count M of the modulated beam L33 is set to be larger for a shaping material having a low melting point. As a result, scanning can be performed on a larger region in one scan, and the throughput can be improved.

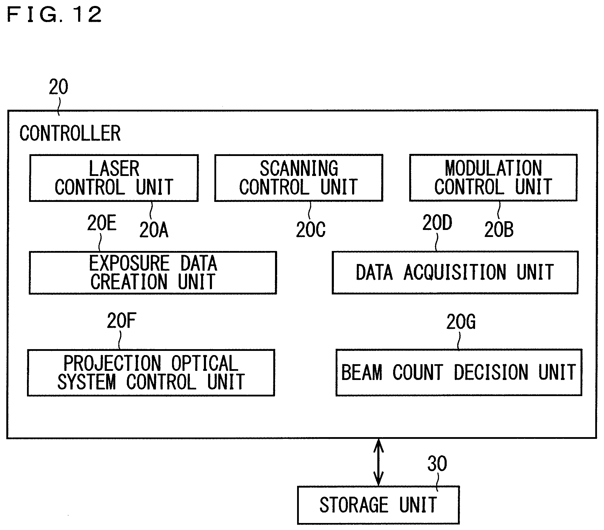

Fig. 12 is a functional block diagram showing an example of the internal configuration of the controller 20. As compared with the controller 20 in Fig. 1, the controller 20 further includes a projection optical system control unit 20F and a beam count decision unit 20G. The beam count decision unit 20G decides the beam count M (that is, the number of spots S3) of the modulated beam L33 with which the shaping material layer 120 is irradiated. The beam count decision unit 20G decides the beam count M according to, for example, the type of shaping material. The user may input information indicating the type of shaping material to the controller 20 by operating an input device (not shown). Alternatively, the controller 20 may receive the information from an external apparatus (not shown) or may read the information from an external storage device (not shown). The correspondence relationship between the type of shaping material and the beam count M may, for example, be decided in advance and stored in the storage unit 30.

The exposure data creation unit 20E creates exposure data in accordance with the 3-dimensional shaping data and the beam count M decided by the beam count decision unit 20G. More specifically, the exposure data creation unit 20E assigns the spatial modulation elements to one group (the modulation element group 141) according to the beam count M decided by the beam count decision unit 20G. Then, the exposure data creation unit 20E creates exposure data based on the 3-dimensional shaping data so that the spatial light modulator 14 can modulate the parallel beam L31 with the M groups.

The modulation control unit 20B controls the spatial light modulator 14 on the basis of the exposure data created by the exposure data creation unit 20E. The spatial light modulator 14 modulates the parallel beam L31 with the M groups.

The projection optical system control unit 20F controls the magnification of the projection optical system 150 according to the beam count M decided by the beam count decision unit 20G. More specifically, the projection optical system control unit 20F controls the moving mechanism 159 so that the magnification of the projection optical system 150 becomes M/N.

The scanning control unit 20C decides the movement path of the spot S3 according to the beam count M decided by the beam count decision unit 20G. That is, if the beam count M of the spot S3 differs, the movement path of the spot S3 for scanning the entire region on the shaping material layer 120 differs, and hence the scanning control unit 20C decides the movement path according to the beam count M. More specifically, for example, when scanning is performed with one spot S3, the scanning unit 19 moves the spot S3 by one row in an array direction D2 each time scanning of one row is completed and performs scanning of the next row. On the other hand, for example, as shown in Fig. 3, in a case in which M (five) spots S3 spaced apart by one row are scanned, when the scanning of the M (five) rows is finished, the spot S3 is moved by one row in the array direction D2 to scan the next M (five) rows. When the scanning of the M (five) rows is finished, the spot S3 is moved by M (5) rows in the array direction D2 to scan the next M (five) rows. Subsequently, scanning is similarly performed.

### <Processing by Controller>

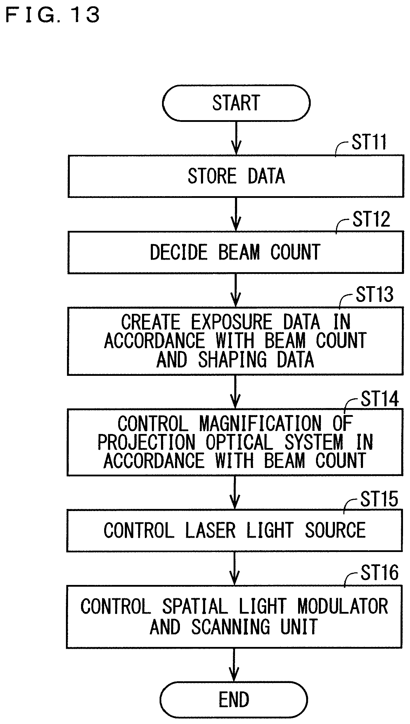

An example of processing by the controller 20 will be described next with reference to Fig. 13. Fig. 13 is a flowchart showing an example of processing by the controller 20. First, the data acquisition unit 20D receives 3-dimensional shaping data from, for example, an external apparatus or a storage medium to store the 3-dimensional shaping data in the storage unit 30 (step ST11).

Next, the beam count decision unit 20G decides the beam count M (step ST12). For example, information indicating the type of shaping material is input to the controller 20, and the beam count decision unit 20G decides the beam counter M according to the type. For example, the beam count decision unit 20G decides the beam count M to a smaller value as the melting point of the shaping material is higher.

Next, the exposure data creation unit 20E creates exposure data based on the beam count M and the 3-dimensional shaping data (step ST13). The exposure data creation unit 20E creates exposure data based on the beam count M and the 3-dimensional shaping data such that the spatial light modulator 14 can operate as a spatial light modulator having M groups.

The projection optical system control unit 20F controls the magnification of the projection optical system 150 according to the beam count M decided by the beam count decision unit 20G (step ST14). More specifically, the projection optical system control unit 20F controls the operation of the moving mechanism 159 so that the magnification of the projection optical system 150 becomes M/N and adjusts the position of each optical element of the projection optical system 150.

A laser control unit 20A controls the laser light source 11 (step ST15). More specifically, the laser control unit 20A causes the laser light source 11 to emit the laser beam L30. The laser beam L30 is converted into the parallel beam L31 in the illumination optical system 12 and enters the spatial light modulator 14.

The modulation control unit 20B then controls the spatial light modulator 14, and the scanning control unit 20C controls the scanning unit 19 (step ST16). More specifically, the modulation control unit 20B controls the spatial light modulator 14 on the basis of the exposure data created by the exposure data creation unit 20E. The spatial light modulator 14 modulates the parallel beam L31 with the M groups. The modulated beam L32 after modulation is multiplied by M/N on the b-axis by the projection optical system 150 and enters the splitting optical system 18 as a modulated beam L32A. The splitting optical system 18 splits the modulated beam L32A into the M modulated beams L33. Each modulated beam L33 has an intensity distribution reflecting the shape indicated by the shaping data.

The M modulated beams L33 are applied onto the shaping material layer 120 via the scanning unit 19. The scanning control unit 20C controls the scanning unit 19 in parallel with the control of the spatial light modulator 14 by the modulation control unit 20B and moves the M spots S3 on the shaping material layer 120 on the movement path according to the beam count M (step ST16). As a result, the spot S3 moves on the shaping material layer 120 with an intensity reflecting the shape indicated by the 3-dimensional shaping data. As a result, the shaping material layer 120 is melted and sintered at a position corresponding to the shaping data and is shaped into the shape indicated by the shaping data.

In the 3-dimensional shaping apparatus 100 according to the second embodiment, the plurality of spots S3 are separated from each other on the shaping material layer 120 (see Fig. 3). Thus, as in the first embodiment, a 3-dimensional shaped object can be manufactured with high shape accuracy.

Moreover, in the second embodiment, the power of each spot S3 can be changed by changing the beam count M. For example, the power of the spot S3 can be increased by adopting a small beam count M for a shaping material having a high melting point. Therefore, a higher amount of heat can be applied to the shaping material at the spot S3, and the shaping material can be melted and sintered even if the melting point is high.

On the other hand, for a shaping material having a low melting point, by adopting a larger beam count M, scanning can be performed in a larger region by one movement in the scanning direction D1. This can improve the throughput.

As exemplarily shown in Fig. 13, the magnification control (step ST14) of the projection optical system 150 may be performed in a state where the shaping material layer 120 is not yet irradiated with the modulated beam L33. According to this, it is possible to avoid irradiating the shaping material layer 120 with an unnecessary modulated beam during magnification control in the projection optical system 150, that is, during movement of each optical element of the projection optical system 150.

### <Another Configuration of Projection Optical System 150>

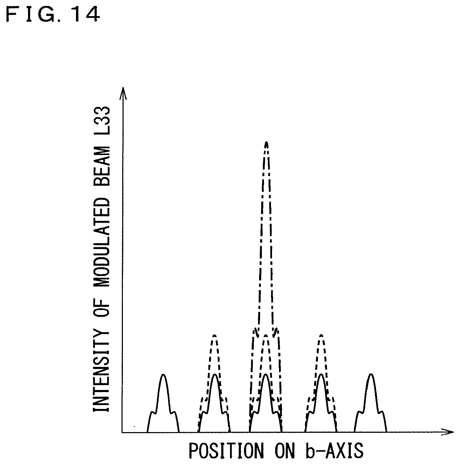

As described above, the power of the modulated beam L33 increases as the beam count M of the modulated beam L33 decreases. In other words, the intensity of light at each position on the b-axis in the modulated beam L33 increases. Fig. 14 is a graph showing an example of the intensity distribution of the modulated beam L33. In the example of Fig. 14, the intensity distribution of the modulated beam L33 when the beam count M is 5 is indicated by a solid line, the intensity distribution of the modulated beam L33 when the beam count M is 3 is indicated by a broken line, and the intensity distribution of the modulated beam L33 when the beam count M is 1 is indicated by an alternate long and short dash line. As shown in Fig. 14, the intensity of the modulated beam L33 increases as the beam count M decreases. This is because the magnification (M·Db0/N) of the projection optical system 150 on the b-axis decreases as the beam count M increases. That is, as the projection optical system 150 reduces the modulated beam L32 on the b-axis, the intensity of the modulated beam L32A increases. As a result, the intensity of the modulated beam L33 separated from the modulated beam L32A also increases.

As shown in Fig. 14, since the change amount of the intensity of the spot S3 accompanying a change in the beam count M is large, it is difficult to finely adjust the peak value of the intensity of the spot S3 by changing the beam count M. If the peak value of the intensity is too high, the central region of the shaping material layer 120 which corresponds to the spot S3 is instantaneously steeply heated. This may cause spatter or fume of the shaping material. Accordingly, the projection optical system 150 may adjust the width of the modulated beam L32A on the c-axis.

For example, by increasing the width of the modulated beam L32A on the c-axis by the projection optical system 150, it is possible to alleviate a significant increase in the intensity of the modulated beam L32A accompanying a decrease in the beam count M. This makes it possible to avoid an excessive increase in the peak value of the intensity of the modulated beam L33.

Conversely, in a case in which the intensity is slightly insufficient, it may be more desirable for the projection optical system 150 to reduce the width of the modulated beam L32A on the c-axis than to reduce the beam count M. This is because the throughput is greatly reduced when the beam count M is reduced. In this case, by reducing the width of the modulated beam L32A on the c-axis, the projection optical system 15 can increase the intensity of the modulated beam L33 and solve the insufficient intensity.

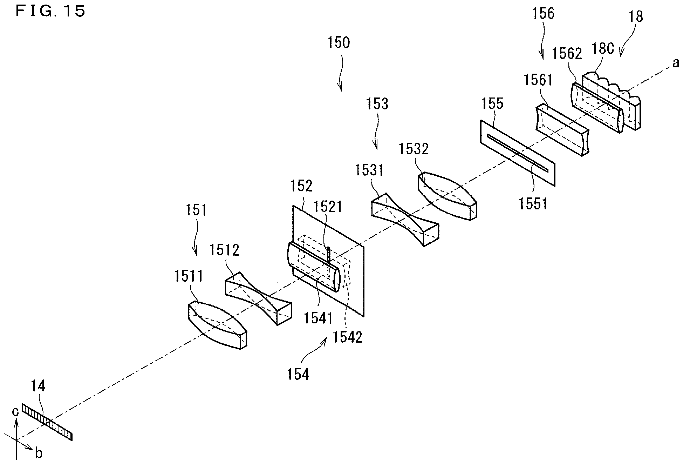

Fig. 15 is a view schematically showing an example of the configuration of the projection optical system 150. The projection optical system 150 adjusts the width of the modulated beam L32 also on the c-axis while adjusting the width of the modulated beam L32 on the b-axis. As compared with the projection optical system 150 in Fig. 11, the projection optical system 150 further includes a third lens group 154, an aperture portion 155, and a fourth lens group 156 as a c-axis enlargement or reduction optical system (zoom optical system).

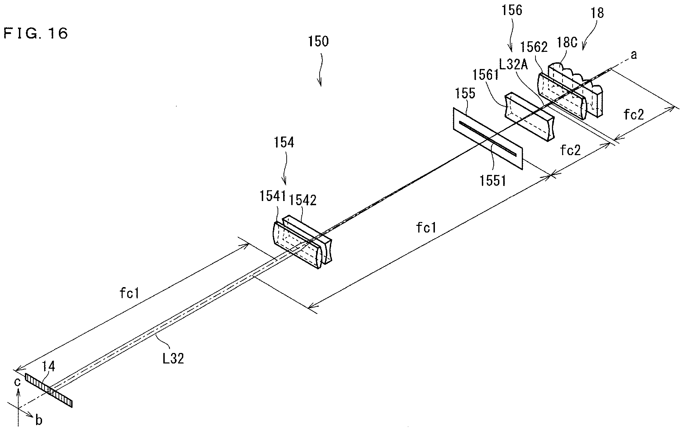

Fig. 16 is a perspective view schematically showing an example of the configuration of only the c-axis zoom optical system in the projection optical system 150. The modulated beam L32 from the spatial light modulator 14 enters the third lens group 154. The third lens group 154 condenses the modulated beam L32 on the c-axis and condenses the beam on a slit-shaped opening 1551 of the aperture portion 155.

The third lens group 154 includes, for example, lenses 1541 and 1542. The lens 1541 is a convex lens, and the lens 1542 is a concave lens. In the examples of Figs. 15 and 16, the lenses 1541 and 1542 are cylindrical lenses. In the examples of Figs. 15 and 16, the lens 1541 is located closer to the spatial light modulator 14 than the lens 1542. In the example of Fig. 15, the lens 1541 is positioned between the first lens group 151 and the aperture portion 152, and the lens 1542 is positioned between the aperture portion 152 and the second lens group 153.

The opening 1551 is formed in the aperture portion 155. The opening 1551 has an elongated shape with the c-axis as a minor axis and the b-axis as a major axis, and the modulated beam L32 from the third lens group 154 passes through the opening 1551. The aperture portion 155 blocks unnecessary light such as high-order diffracted light included in the modulated beam L32. The aperture portion 155 can function as a diaphragm. In the example of Fig. 15, the aperture portion 155 is located between second lens group 153 and fourth lens group 156. In a case in which a Linear PLV is adopted for the spatial modulator 14, diffracted light appears not only on the long axis but also on the short axis, and hence it is necessary to block high-order diffracted light by the aperture portion 155. The Linear PLV will be described later.

The fourth lens group 156 converts the modulated beam L32 having passed through the opening 1551 into the modulated beam L32 parallel to the c-axis. The fourth lens group 156 includes, for example, lenses 1561 and 1562. The lens 1561 is a concave lens, and the lens 1562 is a convex lens. In the examples of Figs. 15 and 16, the lenses 1561 and 1562 are cylindrical lenses. In the examples of Figs. 15 and 16, the lens 1561 is located closer to the spatial light modulator 14 than the lens 1562. In the example of Fig. 15, the fourth lens group 156 is located between aperture portion 155 and the splitting optical system 18.

The lenses 1541 and 1542 of the third lens group 154, the aperture portion 155, and the lenses 1561 and 1562 of the fourth lens group 156 are configured to be movable in the optical axis (a-axis) direction independently of each other. The moving mechanism 159 also moves these optical elements independently.

Similarly to the b-axis, the c-axis side of the projection optical system 150 constitutes a both-side telecentric optical system. This magnification is expressed by fc2/fc1 using a composite focal length fc 1 of the third lens group 154 and a composite focal length fc2 of the fourth lens group 156. Note that the positions of the optical elements of the projection optical system 150 are adjusted such that the spatial light modulator 14 and the aperture portion 155 coincide with the front focal position and the rear focal position of the third lens group 154, respectively, and the aperture portion 155 and the lens array 18C coincide with the front focal position and the rear focal position of the fourth lens group 156, respectively.

As described above, the projection optical system 150 can also enlarge or reduce the modulated beam L32 on the c-axis. This makes it possible to more finely adjust the intensity of the modulated beam L33 with respect to a significant change in the intensity of the modulated beam L33 accompanying the change in the beam count M. In other words, the moving mechanism 159 has such position resolution that the intensity of the modulated beam L33 can be adjusted by an adjustment amount smaller than the amount of change in the intensity of the modulated beam L33 accompanying the change in the beam count M. This makes it possible to suppress spatter or fume of the shaping material. Alternatively, the insufficient intensity of the modulated beam L33 can be compensated.

### <Laser Light Source>

In the above example, fine adjustment of the intensity of the modulated beam L33 is performed by enlargement or reduction of the modulated beam on the c-axis using the projection optical system 150. However, the present invention is not necessarily limited to this. Instead of or in addition to the enlargement/reduction of the modulated beam on the c-axis, for example, as the laser light source 11, a light source capable of emitting the laser light L30 with variable intensity may be adopted. The laser control unit 20A controls the intensity of the laser light L30 emitted from the laser light source 11. For example, in the case of a semiconductor laser, the intensity can be adjusted by adjusting the value of the current flowing through the semiconductor laser. This also makes it possible to more finely adjust the intensity of the modulated beam L33 with respect to a significant change in the intensity of the modulated beam L33 accompanying the change in the beam count M. In other words, the laser light source 11 can adjust the intensity of the laser light L30 with a resolution smaller than the amount of change in the intensity of the modulated beam L33 accompanying the change in the beam count M.

### <Aperture Portion>

As exemplarily shown in Figs. 8 to 10, the splitting optical system 18 may be provided with an aperture portion 18D. The aperture portion 18D is provided at a focal position on the image side of the lens array 18C. A plurality of (here, five) openings 18d arranged along the b-axis are formed in the aperture portion 18D. Each opening 18d is provided at a focal position on the image side of each lens 18c. Each of the plurality of modulated beams L33 from the lens array 18C passes through the plurality of openings 18d of the aperture portion 18D. This makes it possible to block unnecessary light included in the modulated beam L33. The unnecessary light includes, for example, light that has passed through the boundary between the plurality of lenses 18c of the lens array 18C. At the boundary, it is considered that the actual lens shape easily deviates from the design shape as compared with the center. In that case, the light passing through the boundary may travel in an unintended direction. The aperture portion 18D can block such unnecessary light. This can reduce unnecessary light with which the shaping material layer 120 is irradiated.

### <Control of Spatial Light Modulator>

The exposure data creation unit 20E of the controller 20 may create the exposure data of the spatial light modulator 14 such that the intensity at both ends of each partially modulated beam L321 is smaller than the intensity at the center side. The modulation control unit 20B controls the spatial light modulator 14 on the basis of the exposure data, so that the intensity at both ends of the partially modulated beam L321 is smaller than the intensity at the center side in the modulated beam L32.

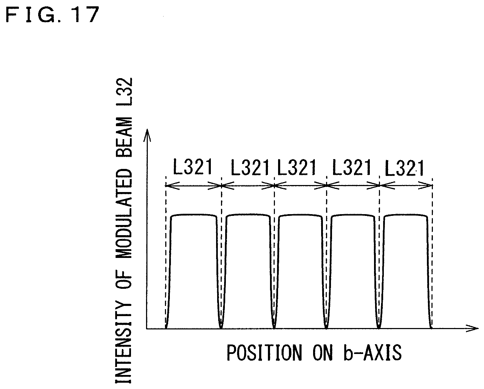

Fig. 17 is a view schematically showing an example of the intensity distribution of the modulated beam L32. In the example of Fig. 17, the modulated beam L32 includes five partially modulated beams L321. In the example of Fig. 17, the intensity distribution of each partially modulated beam L321 has a top hat shape, and the intensity at both ends is smaller than the intensity at the center side. However, depending on the 3-dimensional shaping data, there may be a partially modulated beam L321 whose intensity is substantially 0 at any position on the b-axis. That is, there may be a group that is turned off. In this case, the intensity at both ends of the partially modulated beam L321 is equal to the intensity at the center side and is substantially 0.

When the intensity at both ends of each partially modulated beam L321 decreases, the intensity of light incident on the boundary between the lenses 18c of the lens array 18C becomes smaller than the intensity of light incident on the center of each lens 18c. Ideally, the intensity of light incident on the boundary is zero. This can reduce or eliminate unnecessary light generated by passing through the boundary between the lenses 18c.

As described above, by sufficiently reducing the intensity of light at the ends of the partially modulated beam L321, even if an aperture portion 18D is not provided, unnecessary light applied on the shaping material layer 120 can be reduced.

When the aperture portion 18D is not provided, the apparatus size and the manufacturing cost can be reduced. In a case in which the aperture portion 18D is provided, unnecessary light can be blocked with higher accuracy. Obviously, the spatial light modulator 14 may modulate the parallel beam L31 such that the intensity at both ends of the partially modulated beam L321 becomes smaller than the intensity at the center side while the aperture portion 18D is provided.

### <Splitting Optical System>

In the above-described example, the splitting optical system 18 includes the lens array 18C but may include lens arrays 18A and 18B instead of the lens array 18C. In this case, the aperture portion 18D is provided at the focal position of the lens arrays 18A and 18B between the lens arrays 18A and 18B.

### <Moving Mechanism of Lens Array>

As described above, the modulated beam L32A from the projection optical system 150 enters the entire M lenses 18c (see Figs. 8 to 10). This allows the lens array 18C to appropriately split the modulated beam L32A into the M modulated beams L33. In order to cause the modulated beam L32A to enter the M lenses 18c as described above, it is necessary to adopt an odd number as the beam count M. That is, the projection optical system control unit 20F needs to limit the beam count M to an odd number (for example, 1, 3, or 5) and control the projection optical system 150 at a magnification (M·Db0/N) corresponding to the beam count M. Hereinafter, the reason will be described.

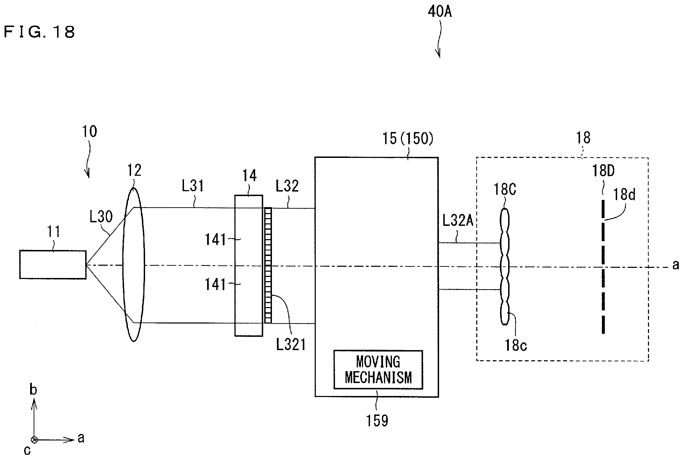

Consider a case in which in order to set the beam count M to 2, the projection optical system 150 multiplies the modulated beam L32 by (2·Db0/5) on the b-axis. Fig. 18 schematically shows an example of an optical path when 2 is employed as the beam count M. In this case, since the spatial light modulator 14 modulates the parallel beam L31 by two groups (modulation element groups 141), the modulated beam L32 is configured by the two partially modulated beams L321. The projection optical system 150 multiplies the modulated beam L32 by (2·Db0/5) around the optical axis (a-axis). In this case, as shown in Fig. 18, the modulated beam L32A enters the center lens 18c and half of the lenses 18c on both sides thereof. In this case, the lens array 18C cannot split the modulated beam L32A into two beams.

As described above, when an even number is employed as the beam count M, the splitting optical system 18 cannot appropriately split the modulated beam L32A. For this reason, in the above-described example, the beam count M is limited to an odd number.

When a count N of the lenses 18c of the lens array 18C is an even number (for example, 4), it is necessary to limit the beam count M to an even number. The reason will be described next. That is, in a case in which the count N is an even number, when the lens array 18C is placed such that the optical axis (a-axis) passes through the center of the lens array 18C, the optical axis does not pass through the center of the lens 18c but passes through the boundary between the two lenses 18c on the center side. Since the projection optical system 150 adjusts the width of the modulated beam L32A around the optical axis, the modulated beam L32A can enter only the even number of lenses 18c. Therefore, it is necessary to limit the beam count M to an even number.

As described above, when the count N of the lenses 18c is an odd number, the beam count M may be limited to an odd number, whereas when the number N of the lenses 18c is an even number, the beam count M may be limited to an even number. In other words, the beam count M may be limited to an odd number when the optical axis (a-axis) passes through the center of the lens 18c, and the beam count M may be limited to an even number when the optical axis passes through the boundary between the lenses 18c.

However, it is also desirable that an even number and an odd number can be arbitrarily selected as the beam count M of the modulated beam L33. Hereinafter, the 3-dimensional shaping apparatus 100 that can adopt either an even number or an odd number as the beam count M of the modulated beam L33 will be described.

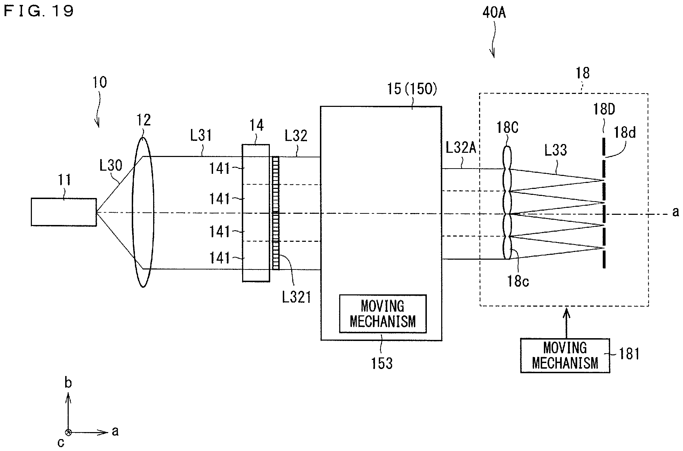

Fig. 19 is a view schematically showing an example of the configuration of the 3-dimensional shaping apparatus 100. The 3-dimensional shaping apparatus 100 has the same configuration as the above-described 3-dimensional shaping apparatus 100 except for the presence/absence of a moving mechanism 181. Fig. 19 also schematically shows an example of an optical path in the 3-dimensional shaping apparatus 100. The moving mechanism 181 is a mechanism that moves the splitting optical system 18 relative to the projection optical system 150 on the b-axis. In the example of Fig. 19, the splitting optical system 18 includes a lens array 18C and an aperture portion 18D, and the moving mechanism 181 integrally moves the lens array 18C and the aperture portion 18D. The moving mechanism 181 includes, for example, a moving mechanism such as a ball screw mechanism or a cylinder mechanism. The moving mechanism 181 is controlled by the controller 20.

The lens array 18C and the aperture portion 18D may be coupled to each other by a coupling member (not shown). The moving mechanism 181 can integrally move the lens array 18C and the aperture portion 18D by moving the coupling member.

In the example of Fig. 19, the count N of the lenses 18c of the lens array 18C is 5 (odd number). The moving mechanism 181 adjusts the relative positional relationship between the projection optical system 150 and the splitting optical system 18 such that the modulated beam L32A from the projection optical system 150 enters the entire M lenses 18c. For example, when the beam count M is an odd number like the number N, the moving mechanism 181 stops the lens array 18C and the aperture portion 18D at a first position to be described next. The first position is, for example, a position where the optical axis (a-axis) of the projection optical system 150 passes through the center of the lens array 18C on the b-axis (see Figs. 8 to 10). That is, the first position is a position where the optical axis of the projection optical system 150 passes through the center of the lens 18c at the center of the lens array 18C. As a result, the modulated beam L32A from the projection optical system 150 can enter the odd number of lenses 18c. Therefore, the splitting optical system 18 can split the modulated beam L32A into the odd number of modulated beams L33.

In contrast, when the beam count M is an even number unlike the count N, the moving mechanism 181 stops the lens array 18C and the aperture portion 18D at a second position to be described next. The second position is, for example, a position obtained by shifting the first position along the b-axis by a half of the width of lens 18c on the b-axis. At the second position, the optical axis (a-axis) of the projection optical system 150 passes through the boundary between the two adjacent lenses 18c (see Fig. 19). As a result, the modulated beam L32A from the projection optical system 150 can enter the even number of lenses 18c. Therefore, the splitting optical system 18 can split the modulated beam L32A into the even number of modulated beams L33.

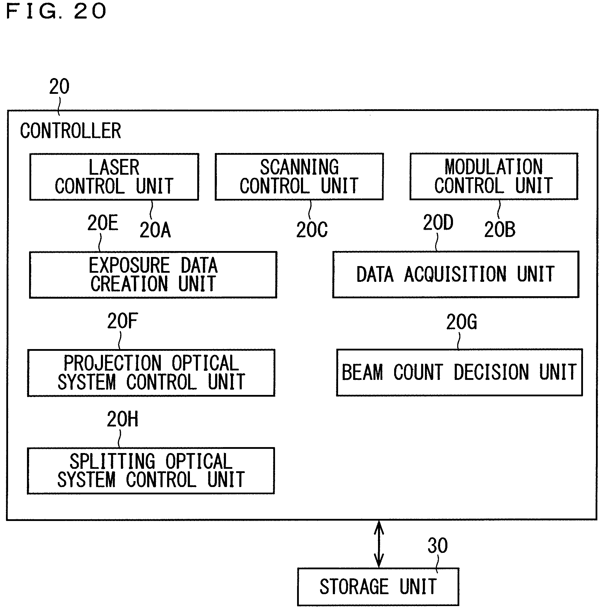

Fig. 20 is a functional block diagram showing an example of the configuration of the controller 20. As compared with the controller 20 in Fig. 12, the controller 20 further includes a splitting optical system control unit 20H. When the beam count M decided by the beam count decision unit 20G is an odd number, the splitting optical system control unit 20H controls the moving mechanism 181 to stop the splitting optical system 18 at the first position. When the beam count M decided by the beam count decision unit 20G is an even number, the splitting optical system control unit 20H controls the moving mechanism 181 to stop the splitting optical system 18 at the second position.

Note that both an even number and an odd number can be adopted as the beam count M by providing the moving mechanism 181 as described above. Conversely, the moving mechanism 181 can be omitted by limiting the beam count M to an even number or an odd number equal to the count N. In this case, the beam irradiation device 40A can be configured with a simple configuration.

### <Processing by Controller>

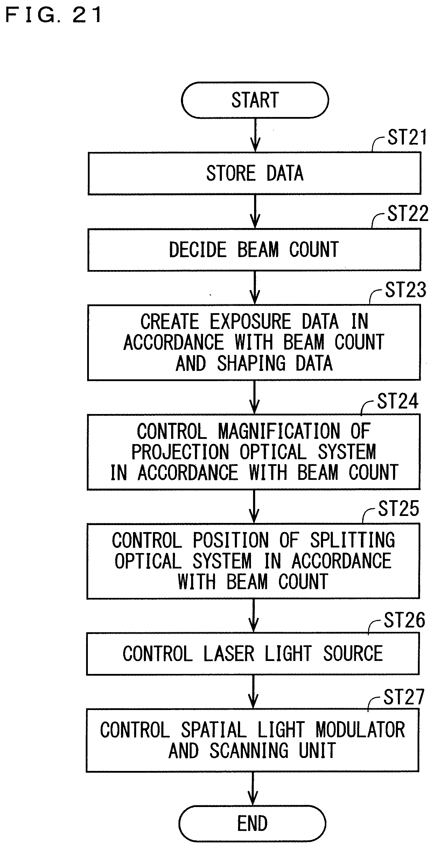

Next, an example of processing of the controller 20 will be described with reference to Fig. 21. Fig. 21 is a flowchart showing an example of processing of the controller 20. First, the data acquisition unit 20D receives 3-dimensional shaping data from, for example, an external apparatus or a storage medium to store the 3-dimensional shaping data in the storage unit 30 (step ST21).

Next, the beam count decision unit 20G decides the beam count M (step ST22). For example, information indicating the type of shaping material is input to the controller 20, and the beam count decision unit 20G decides the beam counter M according to the type. For example, the beam count decision unit 20G decides a smaller beam count M as the melting point of the shaping material is higher.

Next, the exposure data creation unit 20E creates exposure data based on the beam count M and the 3-dimensional shaping data (step ST23). The exposure data creation unit 20E creates exposure data based on the beam count M and the 3-dimensional shaping data such that the spatial light modulator 14 can operate as a spatial light modulator having M groups.

The projection optical system control unit 20F controls the magnification of the projection optical system 150 according to the beam count M decided by the beam count decision unit 20G (step ST24). More specifically, the projection optical system control unit 20F controls the operation of the moving mechanism 159 so that the magnification of the projection optical system 150 on the b-axis becomes M·Db0/N. Furthermore, the projection optical system control unit 20F may adjust the magnification on the c-axis as described above.

The splitting optical system control unit 20H controls the position of the splitting optical system 18 according to the beam count M decided by the beam count decision unit 20G (step ST25). More specifically, the moving mechanism 181 moves the splitting optical system 18 to the first position when the beam count M is an odd number and moves the splitting optical system 18 to the second position when the beam count M is an even number.

Next, the laser control unit 20A controls the laser light source 11 (step ST26). More specifically, the laser control unit 20A causes the laser light source 11 to emit the laser beam L30. The laser beam L30 is shaped into the parallel beam L31 in the illumination optical system 12 and enters the spatial light modulator 14.

Next, the modulation control unit 20B controls the spatial light modulator 14 on the basis of exposure data to modulate the parallel beam L31, and the scanning control unit 20C controls the scanning unit 19 to move the M spots S3 on the shaping material layer 120 on the movement path corresponding to the beam count M (step ST27). Each modulated beam L33 has an intensity distribution reflecting the shape indicated by the shaping data.

According to the 3-dimensional shaping apparatus 100, both an even number and an odd number can be adopted as the beam count M of the modulated beam L33. Therefore, the beam count M of the modulated beam L33 can be more finely adjusted.

### <Third Embodiment>

In the second embodiment, a beam count M of a modulated beam L33 is decided according to the type of shaping material, and the entire region of a shaping material layer 120 is scanned with the decided beam count M. However, the present invention is not necessarily limited to this, and the beam count M may be changed according to the shaping region with respect to the shaping material layer 120. The shaping region is a region where the shaping material is melted or sintered.

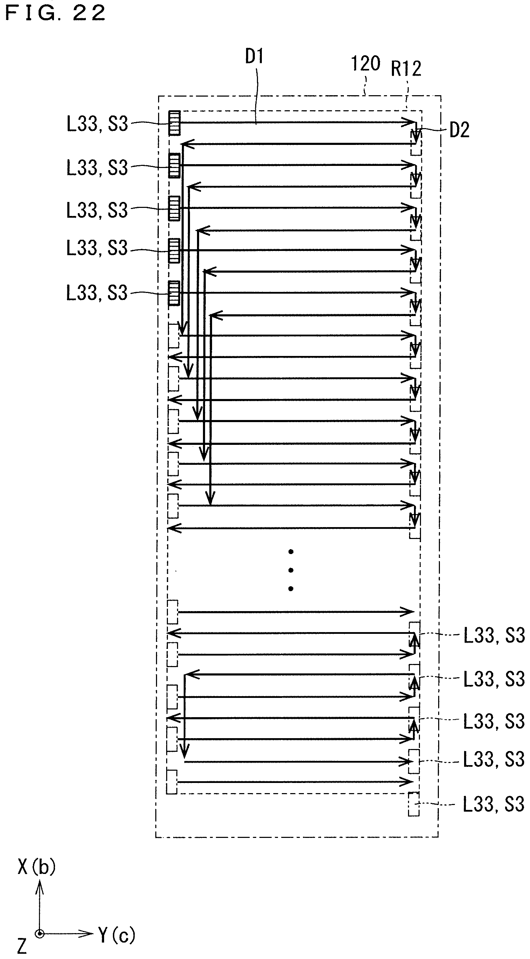

Fig. 22 is a view schematically showing an example of a scanning mode for a spot S3. In the example of Fig. 22, a rectangle R12 indicates an example of a molding region. The shaping material in the rectangle R12 is melted and sintered by being scanned with the spot S3. In the example of Fig. 22, in the last movement in a scanning direction D1, one spot S3 on the lower side of the drawing is located outside the rectangle R12 (the spot S3 on the lower right side of Fig. 22). This scanning line on which one spot is located is an unnecessary line that does not require scanning. That is, in the last scan, not all five spots S3 are required, but four spots S3 are sufficient. In this case, the beam count M may be decreased immediately before the last scanning is performed.

In this case, for example, the beam count M is changed from 5 to 3 to scan three rows of the remaining four rows of scanning lines, and the beam count M is changed from 3 to 1 to scan the remaining one row of a scanning line.

When the beam count M is decreased from 5 to 3, the modulated beams L33 positioned at both ends among the five modulated beams L33 disappear (see also Figs. 8 and 9). That is, the spots S3, of the five spots S3 of the shaping material layer 120, which are located at both ends disappear, and the three spots S3 are formed. Therefore, it is also necessary to correct the movement amount of the spot S3 along an array direction D2. That is, since the first (uppermost) spot S3 among the five spots S3 disappears and the second spot S3 is located at the uppermost position due to the decrease in the beam count M, the movement amount in the array direction D2 also needs to be corrected according to the disappearance of the spot S3.

Referring to Fig. 22, after the scanning of the last five rows of scanning lines is completed, the beam count M is decreased from 5 to 3, and then a scanning unit 19 moves the three spots S3, for example, one row up. As a result, the three spots S3 can be positioned on the remaining three rows of scanning lines. The scanning unit 19 scans three rows of scanning lines by moving the three spots S3 along scanning direction D1. Accordingly, as compared with the case of scanning with the five spots S3, the amount of unnecessary light not used for 3-dimensional shaping can be reduced, and the scanning with respect to the scanning lines of three rows can be more effectively performed.

Next, the beam count M is decreased from 3 to 1. As a result, the spots S3 on both sides disappear (see also Figs. 9 and 10), and one central spot S3 remains. The scanning unit 19 moves one spot S3 downward by four rows. As a result, the spot S3 is positioned on the scanning line of the last one row. Scanning unit 19 scans the scanning line of the last one row by moving one spot S3 along the scanning direction D1. Accordingly, as compared with the case of scanning with the five spots S3, the light loss can be reduced, and the scanning with respect to the scanning lines of three rows can be more effectively performed.

As described above, according to the third embodiment, when at least one of the M1 (for example, five) spots S3 is located in an unnecessary line that does not require scanning in the scanning path of the M1 light beams, the beam count M is reduced from M1 to M2 (for example, 3 or 1). More specifically, the projection optical system 150 changes the magnification to cause modulated beams L32 to enter the M2 lenses 18c and cause a lens array 18C to emit the M2 modulated beams L33. The scanning unit 19 scans the M2 spots S3. Accordingly, scanning with respect to unnecessary lines is omitted. Therefore, the amount of unnecessary light not used for 3-dimensional shaping can be reduced, and the efficiency can be improved.

### <Scanning Speed>

As the beam count M decreases, the power (area integral value of intensity) of the spot S3 increases. Accordingly, if the moving speed (hereinafter, also referred to as a scanning speed) of the spot S3 in the scanning direction D1 is constant, a difference in the amount of heat occurs between scanning lines of different rows. In the above example, the second heat quantity given to the scanning lines of three rows by the three spots S3 is larger than the first heat quantity given to the scanning lines of five rows by the five spots, and the third heat quantity given to a scanning line of one row by one spot S3 is larger than the second heat quantity.

Therefore, a scanning control unit 20C may set the scanning speed after the decrease in the beam count M to be higher than the scanning speed before the decrease in the beam count M. This makes it possible to reduce the variation in the time integration of the heat amount between the scanning lines due to the increase in the area integral value of the intensity of the spot S3. As a more specific example, the scanning control unit 20C sets the scanning speed after the decrease in the beam count M to {(beam count M before decrease)/(beam count M after decrease)} times the scanning speed before the decrease in the beam count M. This makes it possible to avoid variation in the heat amount between the scanning lines due to the decrease in the beam count M.

### <Controller>

A controller 20 that implements the above-described operation will be described next. A beam count decision unit 20G decides the beam count M based on the type of shaping material and shaping data. As a specific example, first, the beam count decision unit 20G decides the beam count M according to the type of shaping material. The beam count M is set to be smaller as, for example, the melting point of the shaping material is higher.

When the decided beam count M is 2 or more, the beam count decision unit 20G decides whether or not there is a scanning line that does not require irradiation of the spot S3 in the 3-dimensional shaping data. For example, when at least one of the M spots S3 is located outside the shaping region in the last movement along the scanning direction D1, the one spot S3 is unnecessary.

Therefore, the beam count decision unit 20G sets the beam count M at the time of the last movement along the scanning direction D1 to be smaller than the beam count M at the time of the other movements. **In** the example of Fig. 22, after the beam count M is decreased from 5 to 3 and scanning is performed with the three spots S3, the beam count M is decreased from 3 to 1 and scanning is performed with the one spot S3.

An example of processing by the controller 20 is similar to that in Fig. 21. However, in step ST22, the beam count decision unit 20G decides the beam count M also based on the 3-dimensional shaping data as described above. In step ST27, the scanning unit 19 moves the spot S3 along a movement path reflecting a decrease in the beam count M during scanning.

According to this, the beam count M can be changed in the middle of scanning, and the unnecessary spots S3 can be eliminated. Therefore, the amount of unnecessary light not used for 3-dimensional shaping can be reduced, and 3-dimensional shaping can be performed with high efficiency.

In addition, the scanning unit 19 sets the scanning speed of the spot S3 after the decrease in the beam count M to be higher than the scanning speed of the spot S3 before the decrease in the beam count M. Therefore, it is possible to reduce the variation in the heat amount between the scanning lines due to the decrease in the beam count M and to improve the throughput. More specifically, the variation in heat amount between the scanning lines due to a decrease in the beam count M can be eliminated by setting the scanning speed of the spot S3 after the decrease in the beam count M to {(beam count M before decrease)/(beam count M after decrease)} times the scanning speed of the spot S3 before the decrease in the beam count M.

In the example of Fig. 22, in the case of scanning the five spots S3, the unnecessary spot S3 occurs on the last five rows, but the unnecessary spot S3 may occur in the middle of the scanning depending on 3-dimensional shaping data. For example, when the first shaping region and the second shaping region are separated from each other in the array direction D2 on the shaping material layer 120, the irradiation of the spot S3 becomes unnecessary in the separation region between the first and second shaping regions. Therefore, when some of the M1 spots are located in the first shaping region and the remaining spots are located in the separation region, the beam count M of the spot S3 may be decreased to eliminate the spot S3 in the separation region. When scanning is performed in the second shaping region, the beam count M may be increased to M1 again.

Considering the case of increasing the beam count M, the scanning speed may be set as follows. That is, the scanning speed of the spot S3 after the change in the beam count M may be set to {(beam count M before change)/(beam count after change)} times the scanning speed of the spot S3 before the change in the beam count M. This makes it possible to eliminate the variation in heat amount between the scanning lines due to the decrease in the beam count M.

Furthermore, the shaping region may differ for each shaping material layer 120. In a certain shaping material layer 120, the width of the shaping region (the width in the array direction D2) may be less than five rows of scanning lines. Also in this case, the beam count M may be appropriately reduced in the scanning of the shaping material layer 120.

### <Interruption of Irradiation and Scanning>

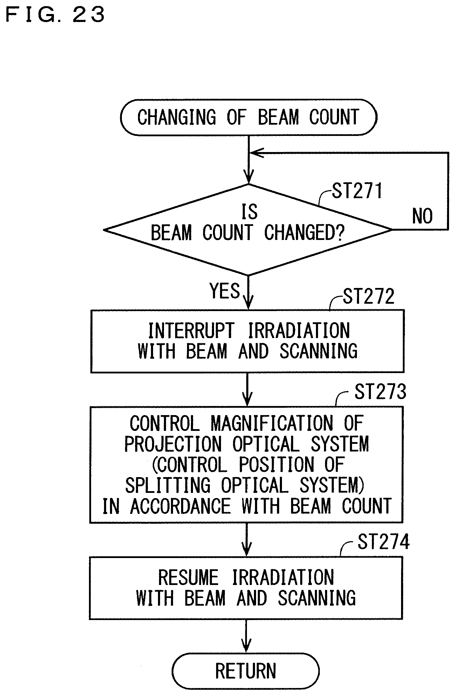

When the beam count M is changed, it is desirable to temporarily interrupt the irradiation and scanning of a light beam L30. Fig. 23 is a flowchart showing an example of processing of the controller 20. The processing in Fig. 23 is executed during scanning of spot S3 (step ST27). The controller 20 determines whether or not to change the beam count M (step ST271). If the beam count M is not changed yet, step ST271 is executed again. When the beam count M is changed, the laser control unit 20A causes the laser light source 11 to interrupt the irradiation with the laser beam L30, and the scanning control unit 20C causes the scanning unit 19 to interrupt the movement of the spot S3 (step ST272).

Next, a projection optical system control unit 20F controls the magnification of a projection optical system 150 on the basis of the changed beam count M (step ST273). For example, when the beam count M is decreased from M1 to M2, the projection optical system control unit 20F changes the magnification of the projection optical system 150 from M1/N to M2/N. Furthermore, a splitting optical system control unit 20H controls a moving mechanism 181 to adjust the position of a splitting optical system 18 as necessary. More specifically, when the beam count M differs in parity before and after a change, it is necessary to adjust the position of the splitting optical system 18, so that the moving mechanism 181 adjusts the position of the splitting optical system 18.

Next, while a laser control unit 20A causes a laser light source 11 to restart the irradiation with the laser light L30, the scanning control unit 20C causes the scanning unit 19 to restart the movement of the spot S3 (step ST274).

This makes it possible to avoid irradiating the shaping material layer 120 with an unnecessary light beam when changing the magnification of the projection optical system 150.

### <Fourth Embodiment>

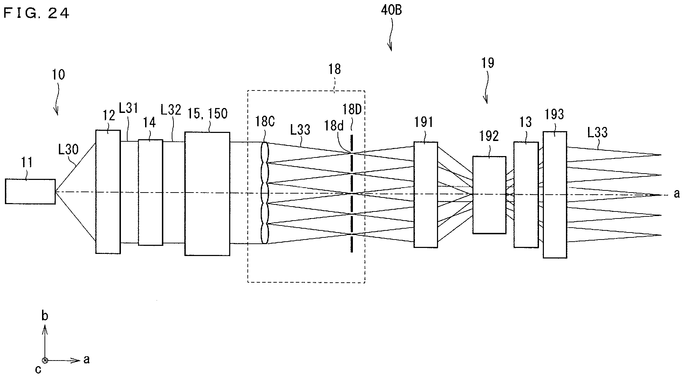

A 3-dimensional shaping apparatus 100 according to the fourth embodiment has the same configuration as the 3-dimensional shaping apparatuses 100 according to the first to third embodiments except for the presence/absence of an image rotator. Fig. 24 is a view schematically showing an example of the configuration of a beam irradiation device 40 of the 3-dimensional shaping apparatus 100 according to the fourth embodiment. Hereinafter, the beam irradiation device 40 according to the fourth embodiment is referred to as a beam irradiation device 40B.

The beam irradiation device 40B includes a beam irradiation unit 10, a spatial light modulator 14, a projection optical system 15 (or a projection optical system 150), a splitting optical system 18, an image rotator 13, and a scanning unit 19. In the example of Fig. 24, the splitting optical system 18 includes the lens array 18C but may include lens arrays 18A and 18B instead of the lens array 18C. Further, in the example of Fig. 24, the splitting optical system 18 includes an aperture portion 18D, but the aperture portion 18D may be omitted.

In the example of Fig. 24, the image rotator 13 is provided at a stage subsequent to a galvanometer mirror 192, and as a more specific example, is provided between the galvanometer mirror 192 and a lens 193. A plurality of modulated beams L33 from the galvanometer mirror 192 enter the image rotator 13. The image rotator 13 integrally rotates the plurality of modulated beams L33 about the optical axis (a-axis). This makes it possible to rotate the array direction of the modulated beams L33 in the bc plane. The image rotator 13 includes, for example, an optical element such as a tab prism or a three-sided mirror and a rotation mechanism that rotates the optical element about the rotation axis (a axis).

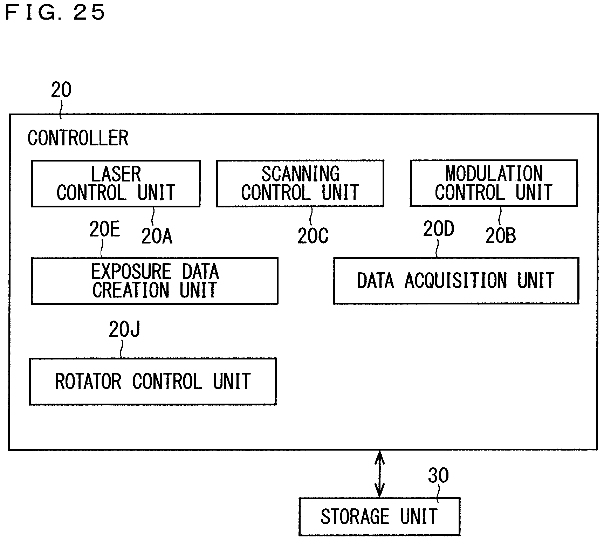

The image rotator 13 is controlled by a controller 20. Fig. 25 is a functional block diagram showing an example of the internal configuration of the controller 20. As compared with the controller 20 in Fig. 1, the controller 20 further includes a rotator control unit 20J. The rotator control unit 20J controls the image rotator 13 to adjust the array direction of the modulated beams L33.

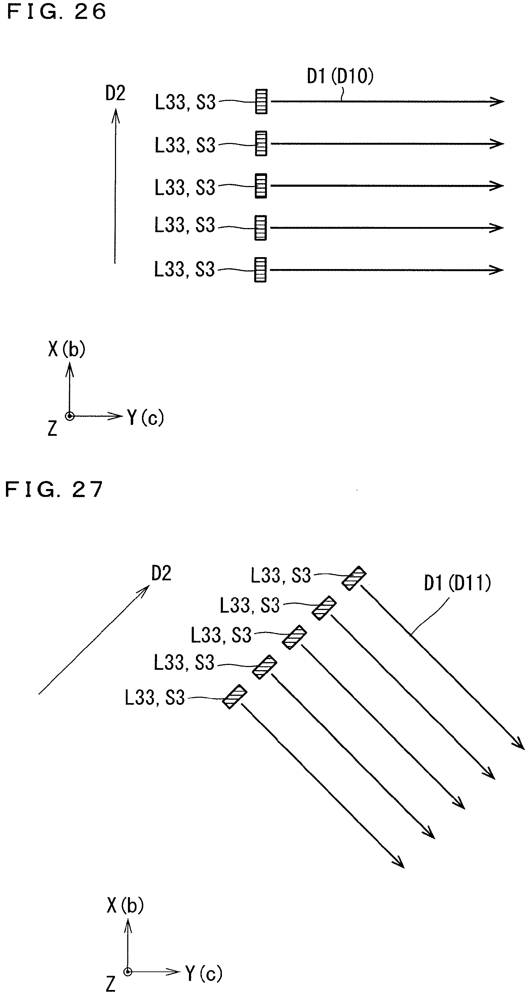

When the image rotator 13 integrally rotates the plurality of modulated beams L33, an array direction D2 of spots S3 on a shaping material layer 120 can be changed. Figs. 26 to 28 are views schematically showing an example of the plurality of spots S3.

Fig. 26 schematically shows an example of the spot S3 when the rotation angle of the image rotator 13 is an initial angle (0°). In the example of Fig. 26, when the rotation angle of the image rotator 13 is 0°, the plurality of spots S3 are arrayed along the Y-axis direction. That is, the array direction D2 is the Y-axis direction.

Although a scanning direction D1 can be set in any direction by operating the two galvanometer mirrors 192 in parallel, it is assumed here that only one galvanometer mirror 192 is operated to move the plurality of spots S3 in the scanning direction D1. In this case, as an example, the scanning direction D1 is orthogonal to the array direction D2. Hereinafter, the scanning direction D1 when the rotation angle is 0° is also referred to as a scanning direction D10.

Fig. 27 schematically shows an example of the spot S3 when the rotation angle of image rotator 13 is 45°. In the example of Fig. 27, when the rotation angle is 45°, the plurality of spots S3 are arrayed along an oblique direction of 45° on the +X side and the +Y side. Therefore, the array direction D2 is parallel to the oblique direction of 45° on the +X side and the +Y side.

In the example of Fig. 24, since the image rotator 13 is located at the subsequent stage of the galvanometer mirror 192, the scanning direction D1 is also rotated by the image rotator 13. Since the scanning direction D1 is orthogonal to the array direction D2, the scanning direction D1 is parallel to the oblique 45° direction on the +X side and the -Y side. Hereinafter, the scanning direction D1 when the rotation angle is 45° is also referred to as a scanning direction D11.

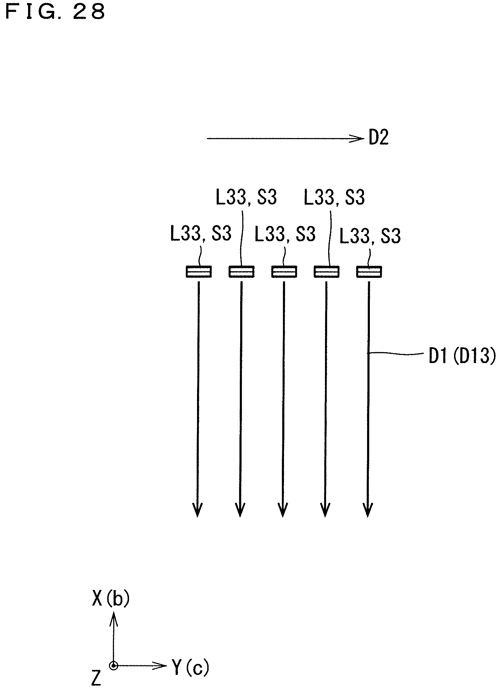

Fig. 28 shows the spot S3 when the rotation angle of image rotator 13 is 90°. In the example of Fig. 28, when the rotation angle is 90°, the plurality of spots S3 are arrayed along the X-axis direction. That is, the array direction D2 is the X-axis direction. Since the scanning direction D1 is orthogonal to the array direction D2 of the spots S3, the scanning direction D1 is the Y-axis direction. Hereinafter, the scanning direction D1 when the rotation angle is 90° is also referred to as a scanning direction D12.

The controller 20 may change the scanning direction D1 for each shaping material layer 120 to be stacked. For example, the 3-dimensional shaping apparatus 100 scans the spot S3 in the scanning direction D10 with respect to a certain first shaping material layer 120. With this operation, the first shaping material layer 120 is melted and sintered according to the shaping data. Next, a supply mechanism 16 of the 3-dimensional shaping apparatus 100 supplies the second shaping material layer 120 onto the first shaping material layer 120, and the rotator control unit 20J rotates the image rotator 13 to set the rotation angle to 45°. The 3-dimensional shaping apparatus 100 scans the spot S3 in a scanning direction D11 with respect to the second shaping material layer 120. With this operation, the second shaping material layer 120 is melted and sintered according to the shaping data. Next, the supply mechanism 16 supplies the third shaping material layer 120 onto the second shaping material layer 120, and the rotator control unit 20J rotates the image rotator 13 to set the rotation angle to 90°. The 3-dimensional shaping apparatus 100 scans the spot S3 in a scanning direction D12 with respect to the third shaping material layer 120. Note that the scanning direction D1 may be changed on the same shaping material layer 120 in addition to being changed for each of the shaping material layers 120 to be stacked, and a change in the scanning direction D1 in the same shaping material layer 120 and a change in the scanning direction for each of the shaping material layers 120 may be combined.

Thereafter, the scanning direction D1 is made different for each shaping material layer 120, and the spot S3 is moved on the shaping material layer 120. Note that the scanning direction D1 need not necessarily differ for each layer, and the scanning direction D1 may differ for each of a plurality of layers.

For comparison, consider a case in which the spot S3 is scanned in the same scanning direction D1 on a plurality of layers. In this case, the shaping distortion of each layer generated along the scanning direction D1 may accumulate. Furthermore, a streak (protrusion or recess) extending along the scanning direction D1 is formed on the surface of the 3-dimensional shaped object, or internal stress is biased, so that the strength of the 3-dimensional shaped object may become weak in one direction.

On the other hand, the occurrence of such a defect can be reduced by appropriately changing the scanning direction D1 for each shaping material layer 120.

It is possible to change the scanning direction D1 by driving the two galvanometer mirrors 192 in parallel and adjusting the rotation speeds of the two galvanometer mirrors. However, since it is necessary to always drive both the galvanometer mirrors 192, the wearing out of the drive mechanism is accelerated.

In contrast to this, in the above example, the spot S3 is moved along the scanning direction D1 only by one galvanometer mirror 192, and the scanning direction D1 is changed by the image rotator 13. According to this, the driving of the other galvanometer mirror 192 can be stopped during the movement in the scanning direction D1 while the scanning direction D1 is changed for each shaping material layer 120. Therefore, the wearing out of the drive mechanism of the galvanometer mirror 192 can be reduced.

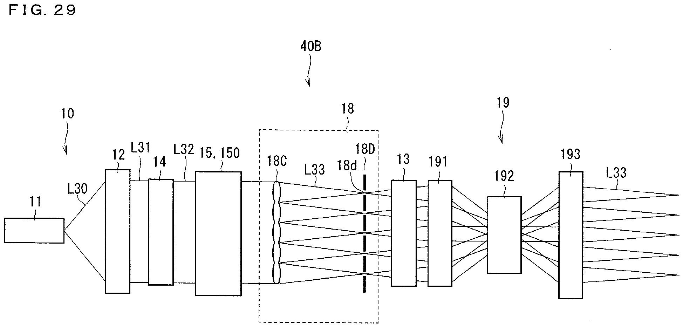

Fig. 29 is a view schematically showing an example of the configuration of a beam irradiation device 40B of the 3-dimensional shaping apparatus 100 according to the fourth embodiment. The beam irradiation device 40B has the same configuration as the beam irradiation device 40B in Fig. 25 except for the position of the image rotator 13. In the example of Fig. 29, the image rotator 13 is provided in front of the galvanometer mirror 192, and as a more specific example, is provided between the splitting optical system 18 and the lens 191.

Since the image rotator 13 integrally rotates the plurality of modulated beams L33, the array direction of the modulated beams L33 in the bc plane can be changed. Therefore, the array direction D2 of the plurality of spots S3 on the shaping material layer 120 can also be changed. However, since the image rotator 13 is provided in front of the galvanometer mirror 192, the scanning direction D1 does not change even if the image rotator 13 rotates.

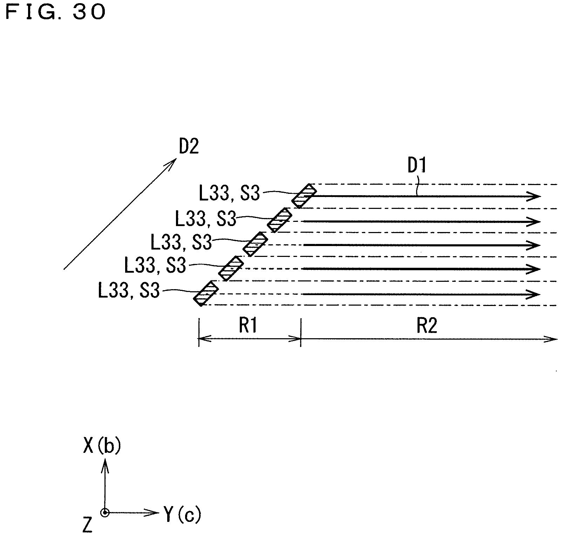

Fig. 30 is a view schematically showing an example of a spot S3 when the rotation angle of the image rotator 13 is 45°. In the example of Fig. 30, the array direction D2 is parallel to a direction at an angle of 45° on the +X side and the +Y side, and the scanning direction D1 is the X-axis direction. The scanning direction D1 obliquely intersects the array direction D2. In the example of Fig. 30, five spots S3 are formed, and the scanning unit 19 integrally moves the five spots S3 along the scanning direction D1.

In the example of Fig. 30, a region R1 is a non-shaping region. Accordingly, when the spot S3 is located in the region R1, the spatial light modulator 14 is controlled such that the intensity of the spot S3 becomes 0. A region R2 on the +X side of the region R1 is a shaping region. When the spot S3 is located in the region R2, the spatial light modulator 14 is controlled so that the spot S3 has an intensity distribution reflecting three-dimensional shaping data. Although a non-shaping region corresponding to the region R1 may also exist on the +X side of the region R2, its illustration is omitted in Fig. 30.

In the example of Fig. 30, a scanning line corresponding to each spot S3 is indicated by being sandwiched between two-dot chain lines. In the example of Fig. 30, the interval between the scanning lines is 0. That is, although the spots S3 are separated from each other, the scanning lines corresponding to the spots S3 are continuous in the Y-axis direction. In other words, the image rotator 13 adjusts the array direction D2 so that the interval between the scanning lines becomes 0.

Accordingly, scanning can be performed on five consecutive rows of scanning lines by one movement in the scanning direction D1. The scanning unit 19 moves the five spots S3 along the orthogonal direction orthogonal to scanning direction D1 by five rows each time for each movement in the scanning direction D1 and scans the region of the next five rows. Thereafter, similarly, scanning is performed in units of five consecutive rows. In this scanning path, it is not necessary to change the movement amount in the orthogonal direction, and hence it is easy to control the scanning unit 19.

Furthermore, since the spots S3 are separated from each other, the flowable range of the shaping material can be narrowed similarly to the first embodiment. Therefore, the expansion of the shaping material can be reduced. Therefore, a 3-dimensional shaped object can be manufactured with high shape accuracy.

Note that the interval between the scanning lines need not necessarily be zero. The interval between the scanning lines can be adjusted by rotating the array direction D2 using the image rotator 13.

As described above, the 3-dimensional shaping apparatus 100 has been described in detail, but the above description is an example in all aspects, and the 3-dimensional shaping apparatus 100 is not limited thereto. It is therefore understood that innumerable modifications that have not been exemplified can be conceived without departing from the scope of the disclosure. The configurations described in the above embodiments and modifications can be appropriately combined or omitted as long as they fall within the scope of the claims.

For example, in the above-described example, the scanning unit 19 changes the traveling direction of the modulated beam L33 and moves the spot S3 on the shaping material layer 120, but the present invention is not necessarily limited thereto. The scanning unit 19 may include a moving mechanism that moves the supply mechanism 16 in the XY plane. This also allows the spot S3 to move on the shaping material layer 120.

In the above example, a moving mechanism 181 moves the splitting optical system 18, but the present invention is not necessarily limited thereto. The moving mechanism 181 may integrally move the optical system at the preceding stage of the splitting optical system 18 on the b-axis.

In the second embodiment, the projection optical system 150 includes a b-axis zoom optical system and a c-axis zoom optical system, but the c-axis zoom optical system is not essential. In a case in which the c-axis zoom optical system is not provided, the various lenses of the projection optical system 150 may not be cylindrical lenses but may be normal lenses including spherical surfaces. Conversely, also in the first embodiment, the lenses 15A and 15C of the projection optical system 15 may be ordinary lenses or cylindrical lenses. The same applies to the third and fourth embodiments.

Similarly, lens arrays 18A to 18C of the splitting optical system 18 may be cylindrical lens arrays. In this case, a c-axis cylindrical lens array may be further provided.

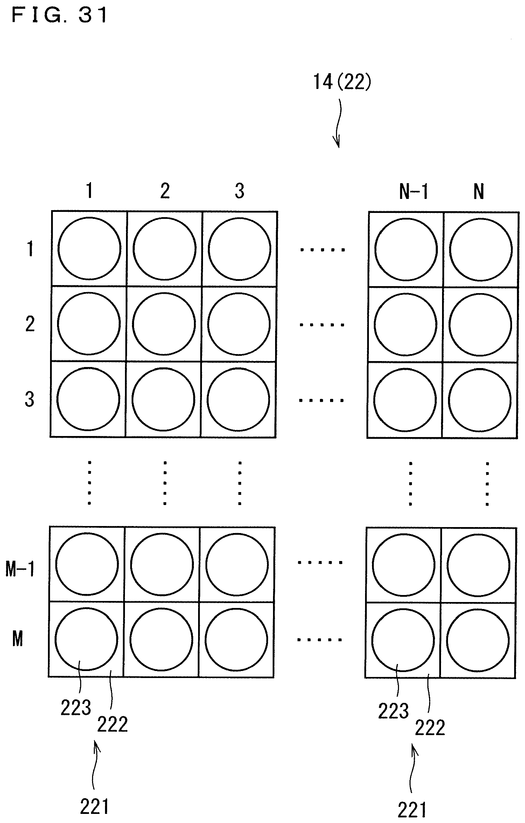

In the above example, the GLV is used as an example of the spatial light modulator 14, but the present invention is not limited thereto, and a Linear-PLV may be adopted as the spatial light modulator 14. The Linear-PLV will be described with reference to Fig. 31.

Fig. 31 is a view schematically showing a Linear-PLV 22 as another example of the configuration of the spatial light modulator 14. The Linear-PLV 22 includes a plurality of substantially rectangular spatial modulation elements 221 arranged in a matrix (that is, two-dimensionally arrayed) on a substrate (not shown). In the Linear-PLV 22, the surfaces of the plurality of spatial modulation elements 221 serve as modulation surfaces. In the example shown in Fig. 31, M spatial modulation elements are arranged in the longitudinal direction and N spatial modulation elements 221 are arranged in the lateral direction in the drawing. The horizontal direction in Fig. 31 corresponds to the major axis direction of the parallel beam L31 (see Fig. 4), and the vertical direction in Fig. 31 corresponds to the minor axis direction of the parallel beam L31.

Each spatial modulation element 221 includes a fixed member 222 and a movable member 223. The fixed member 222 is a substantially rectangular planar member fixed to the substrate and is provided with a substantially circular opening at the center. The movable member 223 is a substantially circular member provided in the opening of the fixed member 222. A fixed reflecting surface is provided on an upper surface (that is, the front surface in the direction perpendicular to the drawing surface in Fig. 31) of the fixed member 222. A movable reflecting surface is provided on the upper surface of the movable member 223. The movable member 223 is movable in a direction perpendicular to the drawing surface in Fig. 31.

In each spatial modulation element 221, reflected light from the spatial modulation element 221 is switched between 0th-order diffracted light (that is, specularly reflected light) and non-0th-order diffracted light by changing the relative position between the fixed member 222 and the movable member 223. In other words, in the spatial modulation element 221, the movable member 223 moves relative to the fixed member 222 to perform light modulation using the diffraction grating. The 0th-order diffracted light output from the optical modulator 22 is guided to the scanning unit 19 by the projection optical system 15 (see Fig. 1). In addition, the non-zero order diffracted light (primarily, the first-order diffracted light) output from the spatial light modulator 14 is guided in a direction different from the scanning unit 19 by the projection optical system 15 and blocked.

In the projection optical system 15, reflected light from the M spatial modulation elements 221 arranged in one column in the vertical direction in Fig. 31 is integrated and applied to the scanning unit 19 as the modulated parallel beam L32. This makes it possible to increase the power density of the parallel beam L32 applied from the scanning unit 19 to the shaping material layer 120. In the spatial light modulator 14, the M spatial modulation elements 221 (that is, M spatial modulation elements) of one column can also be regarded as one modulation element corresponding to one unit space. In other words, for example, a set including M spatial modulation elements 221 arranged in the vertical direction corresponds to one pixel. The spatial light modulator 14 functions as a spatial light modulator including N modulation elements arranged in a row in the long axis direction (that is, the lateral direction in Fig. 31) of the parallel beam L31 on the spatial light modulator 14. By using such a spatial light modulator, shaping is performed as a beam integrated in units of columns extending in the longitudinal direction, so that the shaping material can be irradiated with larger light energy (beam intensity).

### Explanation of Reference Signs

10: beam irradiation unit
11: light source (laser light source)
13: image rotator
14: spatial light modulator
141: modulating element group
22: Linear-PLV
221: spatial modulation element
15: projection optical system
18: splitting optical system
181: moving mechanism
18A to 18C: lens array
18a, 18b: lens
18D: aperture portion
18d: opening
19: scanning unit
192: galvanometer mirror
20: controller
30: storage unit
40: beam irradiation unit
41a: fixed member
41b: movable member
100: 3-dimensional shaping apparatus
L30: light beam (laser light)
L31: light beam (collimated beam)
L32, L32A, L33: light beam (modulated beam)
S3: spot

## Claims

1. A 3-dimensional shaping apparatus that manufactures a 3-dimensional shaped object, the apparatus comprising:
a beam irradiation unit (10) configured to emit a light beam;
a spatial light modulator (14) configured to spatially modulate the light beam emitted by said beam irradiation unit (10) on at least a first axis;
a splitting optical system (18) including at least one lens array (18A to 18C) having a plurality of lenses (18a to 18c) arranged along said first axis and configured to split the light beam modulated by said spatial light modulator (14) into a plurality of light beams by said lens array (18A to 18C); and
a scanning unit (19) configured to scan the shaping material with the plurality of light beams from said splitting optical system (18), **characterized in that**
said splitting optical system (18) includes a plurality of said lens array (18A ,18B), and
said splitting optical system (18) includes an afocal reduction optical system having said plurality of said lens arrays (18A, 18B).

2. The 3-dimensional shaping apparatus according to claim 1, wherein when the number of said lenses (18a to 18c) of said lens array (18A to 18C) is N, N is a natural number of not less than two, said 3-dimensional shaping apparatus further includes:
a projection optical system (15) configured to enlarge or reduce the light beam modulated by said spatial light modulator (14) on said first axis and cause the light beam after the enlargement or reduction to enter said M, M is variable, lenses of said lens array (18A to 18C); and
a controller (20) configured to control a magnification of said projection optical system (15),
said lens array (18A to 18C) splits light beam applied on said M lenses into M light beams.

3. The 3-dimensional shaping apparatus according to claim 2, wherein said controller (20) receives information of said shaping material and sets M to be smaller as a melting point of said shaping material is higher based on said information.

4. The 3-dimensional shaping apparatus according to claim 2 or 3, wherein N is one of an odd number and an even number, and
said controller (20) limits M to said one of the odd number and the even number.

5. The 3-dimensional shaping apparatus according to claim 2 or 3, further comprising a moving mechanism (181) configured to move said splitting optical system (18) relative to said projection optical system (15) on said first axis,
wherein said controller (20) controls said moving mechanism (181) to adjust a relative positional relationship between said projection optical system (15) and said splitting optical system (18) such that the light beams from said projection optical system (15) enter said M lenses of said lens array (18A to 18C).

6. The 3-dimensional shaping apparatus according to any one of claims 2 to 5, wherein said projection optical system (15) enlarges or reduces the light beam modulated by said spatial light modulator (14) at a variable magnification on a second axis intersecting said first axis.

7. The 3-dimensional shaping apparatus according to any one of claims 2 to 6, wherein said beam irradiation unit (10) includes a light source (11) configured to emit the light beam with variable intensity.

8. The 3-dimensional shaping apparatus according to any one of claims 2 to 7, wherein M includes M1 and M2 smaller than M1, and
when at least one of the M1 light beams arranged along said first axis is positioned on an unnecessary line that need not be scanned in a scanning path of the M1 light beams by said scanning unit (19), said controller (20) changes the magnification of said projection optical system (15) to cause said projection optical system (15) to make the light beams enter said M2 lenses (18a to 18c) and cause said lens array (18A to 18C) to apply the M2 light beams, and omits scanning of said unnecessary line by scanning with the M2 light beams by said scanning unit (19).

9. The 3-dimensional shaping apparatus according to claim 8, wherein said scanning unit (19) performs scanning using the M2 light beams at a scanning speed higher than a scanning speed of the M1 light beams.

10. The 3-dimensional shaping apparatus according to claim 8 or 9, wherein said controller (20) changes the magnification of said projection optical system (15) in a state in which irradiation with the light beam by said beam irradiation unit (10) and scanning by said scanning unit (19) are interrupted.

11. The 3-dimensional shaping apparatus according to any one of claims 1 to 10, wherein said lens array (18A to 18C) of said splitting optical system (18) is provided at a focal point of an immediately preceding optical system.

12. The 3-dimensional shaping apparatus according to any one of claims 1 to 11, further comprising an aperture portion (18D) having a plurality of openings (18d) through which the plurality of light beams split by said lens array (18A to 18C) pass.

13. The 3-dimensional shaping apparatus according to any one of claims 1 to 12, wherein said spatial light modulator (14) includes a plurality of groups arranged along at least said first axis,
each of said plurality of groups includes a plurality of spatial modulation elements (221), and
intensity distributions of said plurality of light beams are respectively controlled by said plurality of groups.

14. The 3-dimensional shaping apparatus according to any one of claims 1 to 12, wherein said spatial light modulator (14) includes a plurality of spatial modulation elements (221) arrayed two-dimensionally.

15. The 3-dimensional shaping apparatus according to claim 14, wherein said spatial light modulator (14) modulates the light beam from said beam irradiation unit (10) such that intensity of the light beam incident on a boundary of said plurality of lenses (18a to 18c) of said lens array (18A to 18C) of said splitting optical system (18) is smaller than intensity of the light beam incident on a center of each of said plurality of lenses.

16. The 3-dimensional shaping apparatus according to any one of claims 1 to 15, further comprising an image rotator (13) configured to integrally rotate the plurality of light beams from said splitting optical system (18) about a rotation axis parallel to an optical axis at a variable rotation angle,
wherein said scanning unit (19) includes a galvanometer mirror (192), and
said image rotator (13) is provided at a stage subsequent to said galvanometer mirror (192).

17. The 3-dimensional shaping apparatus according to any one of claims 1 to 15, further comprising an image rotator (13) configured to integrally rotate the plurality of light beams from said splitting optical system (18) about a rotation axis parallel to an optical axis at a variable rotation angle,
wherein said scanning unit (19) includes a galvanometer mirror (192), and
said image rotator (13) is provided at a preceding stage of said galvanometer mirror (192).

18. The 3-dimensional shaping apparatus according to any one of claims 1 to 17, wherein an array direction of the plurality of light beams on said shaping material obliquely intersects a scanning direction of the plurality of light beams by said scanning unit (19), and the plurality of light beams are respectively positioned in a plurality of consecutive scanning lines.

## Patentansprüche

1. 3-dimensionale Formgebungsvorrichtung, die ein 3-dimensionales geformtes Objekt herstellt, wobei die Vorrichtung umfasst:
eine Strahl-Bestrahlungseinheit (10), die konfiguriert ist, um einen Lichtstrahl zu emittieren;
einen räumlichen Lichtmodulator (14), der konfiguriert ist, um den von der Strahl-Bestrahlungseinheit (10) emittierten Lichtstrahl auf mindestens einer ersten Achse räumlich zu modulieren;
ein optisches Teilungssystem (18), das mindestens eine Linsenanordnung (18A bis 18C) umfasst, die eine Vielzahl von Linsen (18a bis 18c) aufweist, die entlang der ersten Achse angeordnet sind, und konfiguriert ist, um den von dem räumlichen Lichtmodulator (14) modulierten Lichtstrahl durch die Linsenanordnung (18A bis 18C) in eine Vielzahl von Lichtstrahlen zu teilen; und
eine Abtasteinheit (19), die konfiguriert ist, um das Formgebungsmaterial mit der Vielzahl von Lichtstrahlen von dem optischen Teilungssystem (18) abzutasten, **dadurch gekennzeichnet, dass**
das optische Teilungssystem (18) eine Vielzahl der Linsenanordnungen (18A, 18B) umfasst, und
das optische Teilungssystem (18) ein optisches afokales Reduktionssystem umfasst, das die Vielzahl der Linsenanordnungen (18A, 18B) aufweist.

2. 3-dimensionale Formgebungsvorrichtung nach Anspruch 1, wobei, wenn die Anzahl der Linsen (18a bis 18c) der Linsenanordnung (18A bis 18C) N ist, wobei N eine natürliche Zahl von nicht weniger als zwei ist, die 3 -dimensionale Formgebungsvorrichtung ferner umfasst:
ein optisches Projektionssystem (15), das konfiguriert ist, um den von dem räumlichen Lichtmodulator (14) modulierten Lichtstrahl auf der ersten Achse zu vergrößern oder zu reduzieren und zu bewirken, dass der Lichtstrahl nach der Vergrößerung oder Reduktion in die M Linsen der Linsenanordnung (18A bis 18C) eintritt, wobei M variabel ist; und
eine Steuerung (20), die konfiguriert ist, um eine Vergrößerung des optischen Projektionssystems (15) zu steuern,
wobei die Linsenanordnung (18A bis 18C) einen auf die M Linsen angewendeten Lichtstrahl in M Lichtstrahlen teilt.

3. 3-dimensionale Formgebungsvorrichtung nach Anspruch 2, wobei die Steuerung (20) Informationen des Formgebungsmaterials empfängt und M basierend auf den Informationen so einstellt, dass es kleiner ist, wenn ein Schmelzpunkt des Formgebungsmaterials höher ist.

4. 3-dimensionale Formgebungsvorrichtung nach Anspruch 2 oder 3, wobei N eine ungerade Zahl oder eine gerade Zahl ist, und
die Steuerung (20) M auf die ungerade Zahl oder die gerade Zahl begrenzt.

5. 3-dimensionale Formgebungsvorrichtung nach Anspruch 2 oder 3, ferner umfassend einen Bewegungsmechanismus (181), der konfiguriert ist, das optische Teilungssystem (18) relativ zu dem optischen Projektionssystem (15) auf der ersten Achse zu bewegen,
wobei die Steuerung (20) den Bewegungsmechanismus (181) steuert, um eine relative Positionsbeziehung zwischen dem optischen Projektionssystem (15) und dem optischen Teilungssystem (18) derart einzustellen, dass die Lichtstrahlen von dem optischen Projektionssystem (15) in die M Linsen der Linsenanordnung (18A bis 18C) eintreten.

6. 3-dimensionale Formgebungsvorrichtung nach einem der Ansprüche 2 bis 5, wobei das optische Projektionssystem (15) den von dem räumlichen Lichtmodulator (14) modulierten Lichtstrahl mit einer variablen Vergrößerung auf einer zweiten Achse, die die erste Achse schneidet, vergrößert oder reduziert.

7. 3-dimensionale Formgebungsvorrichtung nach einem der Ansprüche 2 bis 6, wobei die Strahl-Bestrahlungseinheit (10) eine Lichtquelle (11) enthält, die konfiguriert ist, um den Lichtstrahl mit variabler Intensität zu emittieren.

8. 3-dimensionale Formgebungsvorrichtung nach einem der Ansprüche 2 bis 7, wobei M M1 und M2 kleiner als M1 enthält, und
wenn mindestens einer der M1 Lichtstrahlen, die entlang der ersten Achse angeordnet sind, auf einer unnötigen Linie positioniert ist, die nicht in einem Abtastpfad der M1 Lichtstrahlen durch die Abtasteinheit (19) abgetastet werden muss, die Steuerung (20) die Vergrößerung des optischen Projektionssystems (15) ändert, um zu bewirken, dass das optische Projektionssystem (15) bewirkt, dass die Lichtstrahlen in die M2 Linsen (18a bis 18c) eintreten, und bewirkt, dass die Linsenanordnung (18A bis 18C) die M2 Lichtstrahlen anwendet, und das Abtasten der unnötigen Linie durch Abtasten mit den M2 Lichtstrahlen durch die Abtasteinheit (19) unterlässt.

9. 3-dimensionale Formgebungsvorrichtung nach Anspruch 8, wobei die Abtasteinheit (19) das Abtasten unter Verwendung der M2 Lichtstrahlen mit einer Abtastgeschwindigkeit durchführt, die höher ist als eine Abtastgeschwindigkeit der M1 Lichtstrahlen.

10. 3-dimensionale Formgebungsvorrichtung nach Anspruch 8 oder 9, wobei die Steuerung (20) die Vergrößerung des optischen Projektionssystems (15) in einem Zustand ändert, in dem die Bestrahlung mit dem Lichtstrahl durch die Strahl-Bestrahlungseinheit (10) und das Abtasten durch die Abtasteinheit (19) unterbrochen sind.

11. 3-dimensionale Formgebungsvorrichtung nach einem der Ansprüche 1 bis 10, wobei die Linsenanordnung (18A bis 18C) des optischen Teilungssystems (18) an einem Brennpunkt eines unmittelbar vorhergehenden optischen Systems vorgesehen ist.

12. 3-dimensionale Formgebungsvorrichtung nach einem der Ansprüche 1 bis 11, ferner umfassend einen Öffnungsabschnitt (18D) mit einer Vielzahl von Öffnungen (18d), durch die die Vielzahl von Lichtstrahlen, die durch die Linsenanordnung (18A bis 18C) geteilt werden, hindurchgehen.

13. 3-dimensionale Formgebungsvorrichtung nach einem der Ansprüche 1 bis 12, wobei der räumliche Lichtmodulator (14) eine Vielzahl von Gruppen umfasst, die entlang mindestens der ersten Achse angeordnet sind,
jede der Vielzahl von Gruppen eine Vielzahl von räumlichen Modulationselementen (221) enthält, und
Intensitätsverteilungen der Vielzahl von Lichtstrahlen jeweils durch die Vielzahl von Gruppen gesteuert werden.

14. 3-dimensionale Formgebungsvorrichtung nach einem der Ansprüche 1 bis 12, wobei der räumliche Lichtmodulator (14) eine Vielzahl von räumlichen Modulationselementen (221) umfasst, die zweidimensional angeordnet sind.

15. 3-dimensionale Formgebungsvorrichtung nach Anspruch 14, wobei der räumliche Lichtmodulator (14) den Lichtstrahl von der Strahl-Bestrahlungseinheit (10) derart moduliert, dass die Intensität des Lichtstrahls, der auf eine Grenze der Vielzahl von Linsen (18a bis 18c) der Linsenanordnung (18A bis 18C) des optischen Teilungssystems (18) einfällt, kleiner als die Intensität des Lichtstrahls ist, der auf eine Mitte jeder der Vielzahl von Linsen einfällt.

16. 3-dimensionale Formgebungsvorrichtung nach einem der Ansprüche 1 bis 15, ferner umfassend einen Bildrotator (13), der konfiguriert ist, die Vielzahl von Lichtstrahlen von dem optischen Teilungssystem (18) um eine Rotationsachse parallel zu einer optischen Achse mit einem variablen Rotationswinkel integral zu drehen,
wobei die Abtasteinheit (19) einen Galvanometerspiegel (192) umfasst, und
der Bildrotator (13) an einer Stufe nach dem Galvanometerspiegel (192) bereitgestellt ist.

17. 3-dimensionale Formgebungsvorrichtung nach einem der Ansprüche 1 bis 15, ferner umfassend einen Bildrotator (13), der konfiguriert ist, die Vielzahl von Lichtstrahlen von dem optischen Teilungssystem (18) um eine Rotationsachse parallel zu einer optischen Achse mit einem variablen Rotationswinkel integral zu drehen,
wobei die Abtasteinheit (19) einen Galvanometerspiegel (192) umfasst, und
der Bildrotator (13) an einer vorhergehenden Stufe des Galvanometerspiegels (192) bereitgestellt ist.

18. 3-dimensionale Formgebungsvorrichtung nach einem der Ansprüche 1 bis 17, wobei eine Anordnungsrichtung der Vielzahl von Lichtstrahlen auf dem Formgebungsmaterial eine Abtastrichtung der Vielzahl von Lichtstrahlen durch die Abtasteinheit (19) schräg schneidet und die Vielzahl von Lichtstrahlen jeweils in einer Vielzahl von aufeinanderfolgenden Abtastlinien positioniert sind.

## Revendications

1. Appareil de mise en forme tridimensionnelle qui fabrique un objet de forme tridimensionnelle, l'appareil comprenant :
une unité de rayonnement de faisceau (10) configurée pour émettre un faisceau lumineux ;
un modulateur spatial de lumière (14) configuré pour moduler spatialement le faisceau lumineux émis par ladite unité de rayonnement de faisceau (10) sur au moins un premier axe ;
un système optique de division (18) incluant un ou plusieurs réseaux de lentilles (18A à 18C) ayant une pluralité de lentilles (18a à 18c) agencées le long dudit premier axe et configurées pour diviser le faisceau lumineux modulé par ledit modulateur spatial de lumière (14) en une pluralité de faisceaux lumineux par ledit réseau de lentilles (18A à 18C) ; et
une unité de balayage (19) configurée pour balayer le matériau de mise en forme avec la pluralité de faisceaux lumineux provenant dudit système optique de division (18), **caractérisé en ce que**
ledit système optique de division (18) inclut une pluralité desdits réseaux de lentilles (18A ,18B), et
ledit système optique de division (18) inclut un système optique de réduction afocale ayant ladite pluralité desdits réseaux de lentilles (18A, 18B).

2. Appareil de mise en forme tridimensionnelle selon la revendication 1, dans lequel, quand le nombre desdites lentilles (18a à 18c) dudit réseau de lentilles (18A à 18C) est N, N est un nombre naturel qui n'est pas inférieur à deux, ledit appareil de mise en forme tridimensionnelle inclut en outre :
un système optique de projection (15) configuré pour agrandir ou réduire le faisceau lumineux modulé par ledit modulateur spatial de lumière (14) sur ledit premier axe et amener le faisceau lumineux après l'agrandissement ou la réduction à pénétrer lesdites M, M est variable, lentilles dudit réseau de lentilles (18A à 18C) ; et
un dispositif de commande (20) configuré pour commander un grossissement dudit système optique de projection (15),
ledit réseau de lentilles (18A à 18C) divise le faisceau lumineux appliqué sur lesdites M lentilles en M faisceaux lumineux.

3. Appareil de mise en forme tridimensionnelle selon la revendication 2, dans lequel ledit dispositif de commande (20) reçoit des informations dudit matériau de mise en forme et définit M pour être plus bas à mesure qu'un point de fusion dudit matériau de mise en forme est plus élevé sur la base desdites informations.

4. Appareil de mise en forme tridimensionnelle selon la revendication 2 ou 3, dans lequel N est soit un nombre impair, soit un nombre pair, et
ledit dispositif de commande (20) limite M à soit ledit nombre impair, soit ledit nombre pair.

5. Appareil de mise en forme tridimensionnelle selon la revendication 2 ou 3, comprenant en outre un mécanisme de déplacement (181) configuré pour déplacer ledit système optique de division (18) par rapport audit système optique de projection (15) sur ledit premier axe,
dans lequel ledit dispositif de commande (20) commande ledit mécanisme de déplacement (181) pour ajuster une relation positionnelle relative entre ledit système optique de projection (15) et ledit système optique de division (18) de sorte que les faisceaux lumineux provenant dudit système optique de projection (15) pénètrent dans lesdites M lentilles dudit réseau de lentilles (18A à 18C).

6. Appareil de mise en forme tridimensionnelle selon l'une quelconque des revendications 2 à 5, dans lequel ledit système optique de projection (15) agrandit ou réduit le faisceau lumineux modulé par ledit modulateur spatial de lumière (14) à un grossissement variable sur un deuxième axe qui croise ledit premier axe.

7. Appareil de mise en forme tridimensionnelle selon l'une quelconque des revendications 2 à 6, dans lequel ladite unité de rayonnement de faisceau (10) inclut une source lumineuse (11) configurée pour émettre le faisceau lumineux à une intensité variable.

8. Appareil de mise en forme tridimensionnelle selon l'une quelconque des revendications 2 à 7, dans lequel M inclut M1 et M2 inférieur à M1, et
quand un ou plusieurs des faisceaux lumineux M1 agencés le long dudit premier axe sont positionnés sur une ligne inutile qui n'a pas besoin d'être balayée dans un trajet de balayage des M1 faisceaux lumineux par ladite unité de balayage (19), ledit dispositif de commande (20) change le grossissement dudit système optique de projection (15) pour amener ledit système optique de projection (15) à faire pénétrer les faisceaux lumineux dans lesdites M2 lentilles (18a à 18c) et amener ledit réseau de lentilles (18A à 18C) à appliquer les M2 faisceaux lumineux, et omet le balayage de ladite ligne inutile par le balayage avec les M2 faisceaux lumineux par ladite unité de balayage (19).

9. Appareil de mise en forme tridimensionnelle selon la revendication 8, dans lequel ladite unité de balayage (19) effectue le balayage en utilisant les M2 faisceaux lumineux à une vitesse de balayage supérieure à une vitesse de balayage des M1 faisceaux lumineux.

10. Appareil de mise en forme tridimensionnelle selon la revendication 8 ou 9, dans lequel ledit dispositif de commande (20) change le grossissement dudit système optique de projection (15) dans un état où le rayonnement avec le faisceau lumineux par ladite unité de rayonnement de faisceau (10) et le balayage par ladite unité de balayage (19) sont interrompus.

11. Appareil de mise en forme tridimensionnelle selon l'une quelconque des revendications 1 à 10, dans lequel ledit réseau de lentilles (18A à 18C) dudit système optique de division (18) est fourni à un point focal d'un système optique immédiatement précédant.

12. Appareil de mise en forme tridimensionnelle selon l'une quelconque des revendications 1 à 11, comprenant en outre une partie ouverture (18D) ayant une pluralité d'ouvertures (18d) à travers lesquelles passent la pluralité de faisceaux lumineux divisés par ledit réseau de lentilles (18A à 18C).

13. Appareil de mise en forme tridimensionnelle selon l'une quelconque des revendications 1 à 12, dans lequel ledit modulateur spatial de lumière (14) inclut une pluralité de groupes agencés le long d'au moins ledit premier axe,
chaque groupe de ladite pluralité de groupes inclut une pluralité d'éléments de modulation spatiale (221), et
les distributions d'intensité de ladite pluralité de faisceaux lumineux sont respectivement commandées par ladite pluralité de groupes.

14. Appareil de mise en forme tridimensionnelle selon l'une quelconque des revendications 1 à 12, dans lequel ledit modulateur spatial de lumière (14) inclut une pluralité d'éléments de modulation spatiale (221) disposés en réseau bidimensionnellement.

15. Appareil de mise en forme tridimensionnelle selon la revendication 14, dans lequel ledit modulateur spatial de lumière (14) module le faisceau lumineux provenant de ladite unité de rayonnement de faisceau (10) de sorte que l'intensité du faisceau lumineux incident sur une limite de ladite pluralité de lentilles (18a à 18c) dudit réseau de lentilles (18A à 18C) dudit système optique de division (18) est inférieure à l'intensité du faisceau lumineux incident sur un centre de chaque lentille de ladite pluralité de lentilles.

16. Appareil de mise en forme tridimensionnelle selon l'une quelconque des revendications 1 à 15, comprenant en outre un dispositif de rotation d'image (13) configuré pour faire tourner intégralement la pluralité de faisceaux lumineux provenant dudit système optique de division (18) autour d'un axe de rotation parallèle à un axe optique à un angle de rotation variable,
dans lequel ladite unité de balayage (19) inclut un miroir de galvanomètre (192), et
ledit dispositif de rotation d'image (13) est fourni à un stage subséquent audit miroir de galvanomètre (192).

17. Appareil de mise en forme tridimensionnelle selon l'une quelconque des revendications 1 à 15, comprenant en outre un dispositif de rotation d'image (13) configuré pour faire tourner intégralement la pluralité de faisceaux lumineux provenant dudit système optique de division (18) autour d'un axe de rotation parallèle à un axe optique à un angle de rotation variable,
dans lequel ladite unité de balayage (19) inclut un miroir de galvanomètre (192), et
ledit dispositif de rotation d'image (13) est fourni à un stade précédant dudit miroir de galvanomètre (192).

18. Appareil de mise en forme tridimensionnelle selon l'une quelconque des revendications 1 à 17, dans lequel une direction de réseau de la pluralité de faisceaux lumineux sur ledit matériau de mise en forme coupe obliquement une direction de balayage de la pluralité de faisceaux lumineux par ladite unité de balayage (19), et la pluralité de faisceaux lumineux sont respectivement positionnés dans une pluralité de lignes de balayage consécutives.
